# EUROPÄISCHE PATENTANMELDUNG

(11) **EP 2 777 829 A1**
(43) Veröffentlichungstag der Anmeldung: **17.09.2014**
(21) Anmeldenummer: 14160049.4
(22) Anmeldetag: 14.03.2014
(51) Int. Cl.: B07C 5/02, B65G 15/42, B65G 47/31

(54) **Transporteinrichtung und Sortiermaschine für stangenartiges Gemüse**

(30) Priorität: 14.03.2013 DE 102013102595
(71) Anmelder: Strauß, Jörn, 21614 Buxtehude (DE)
(72) Erfinder: Strauß, Jörn, 21614 Buxtehude (DE); Allers, Sebastian, 21614 Buxtehude (DE)
(74) Vertreter: Richter Werdermann Gerbaulet Hofmann

(57) **Zusammenfassung**

Gegenstand der Erfindung ist eine Transporteinrichtung (100) zum Transport von stangenartigen Gemüsen (10) mit mindestens einer entlang einer Förderstrecke verfahrbaren, eine Vielzahl von voneinander getrennten Aufnahmebereichen (17, 18) zur Aufnahme der Gemüse (10) aufweisenden ersten Fördermitteleinheit (12) zum Vereinzeln der Gemüse (10), und mit mindestens einer entlang einer Sortierstrecke verfahrbaren, eine Vielzahl von voneinander getrennten Aufnahmebereichen (24) zur Aufnahme der Gemüse (10) aufweisenden zweiten Fördermitteleinheit (13) zum Sortieren der Gemüse (10), wobei in Transportrichtung (14) der Gemüse (10) die zweite Fördermitteleinheit (13) hinter der ersten Fördermitteleinheit (12) angeordnet ist, wobei die erste Fördermitteleinheit (12) eine Verfahrgeschwindigkeit aufweist, welche kleiner ist als eine Verfahrgeschwindigkeit der zweiten Fördermitteleinheit (13).

## Beschreibung

Die vorliegende Erfindung betrifft eine Transporteinrichtung zum Transport von stangenartigen Gemüsen, wie Spargel oder Porree. Ferner betrifft die Erfindung eine Sortiermaschine für stangenartige Gemüse, wie Spargel oder Porree.

### STAND DER TECHNIK

Eine Transporteinrichtung zum Transport von stangenartigen Lebensmitteln kann mehrere Streckenabschnitte aufweisen, durch welche die Lebensmittel auf jeweils einer oder mehreren Fördermitteleinheiten transportiert werden können. Die stangenartigen Lebensmittel werden auf die Transporteinrichtung üblicherweise derart aufgebracht, dass sie mit ihrer Längsrichtung im Wesentlichen quer zur Transportrichtung der Transporteinrichtung ausgerichtet sind. Bevor die stangenartigen Lebensmittel einer Sortierstrecke der Transporteinrichtung zugeführt werden, werden die Lebensmittel manuell auf einem der Sortierstrecke vorgelagerten Aufgabestreckenabschnitt aufgebracht, und entweder direkt auf diesem Aufgabestreckenabschnitt oder im Bereich der Übergabe vom Aufgabestreckenabschnitt an die Sortierstrecke manuell oder zumindest unter manueller Nachbearbeitung vereinzelt, so dass die stangenartigen Lebensmittel möglichst separiert voneinander in die Sortierstrecke, insbesondere in die einzelnen Aufnahmebereiche einer Fördermitteleinheit der Sortierstrecke, überführt werden können. Die Vereinzelung der Lebensmittel ist notwendig, um die einzelnen Sortiervorgänge, beispielsweise Messen der Länge oder des Gewichts des Lebensmittels, durchführen zu können.

Die separierte Übergabe der Lebensmittel an die einzelnen Aufnahmebereiche der Fördermitteleinheit der Sortierstrecke kann jedoch bei den bekannten Transporteinrichtungen nicht immer sicher gewährleistet werden, so dass es vorkommen kann, dass zwei oder mehr einzelne Lebensmittel bzw. Lebensmittelstücke von einem Aufnahmebereich der Fördermitteleinheit der Sortierstrecke aufgenommen werden oder in einem Aufnahmebereich überhaupt kein Lebensmittel eingebracht wird, so dass eine manuelle Nachvereinzelung in der Sortierstrecke erforderlich wird, bei welcher die zu viel in einem Aufnahmebereich eingebrachten Lebensmittelstücke dem entsprechenden Aufnahmebereich entnommen werden müssen und in jeweils leere Aufnahmebereiche manuell umverteilt werden müssen. Ferner ist es häufig auch notwendig, dass die Lebensmittelstücke manuell neu ausgerichtet werden müssen, um den Transport der Lebensmittel mit ihrer Längsrichtung quer zur Transportrichtung, insbesondere im Bereich der Sortierstrecke, einzuhalten. Diese manuelle Arbeit bzw. Nachvereinzelung ist für die die Arbeiten durchführenden Personen physisch und mental sehr belastend.

Aus der EP 1 967 470 B1 ist eine Spargelsortiermaschine bekannt, welche eine Fördervorrichtung und eine Spargelsortiervorrichtung umfasst, wobei die Fördervorrichtung zur Zuführung von Spargelstangen zu der Spargelsortiervorrichtung dient. Die Fördervorrichtung weist ein Förderband auf, auf welches die Spargelstangen aufgelegt werden. Das Förderband weist mehrere parallel zueinander angeordnete Förderbandstreifen auf, wobei sich die auf das Förderband aufgelegten Spargelstangen jeweils über alle parallel zueinander angeordnete Förderbandstreifen erstrecken. Auf den Förderbandstreifen sind jeweils eine Vielzahl von Aufnahmemulden ausgebildet, welche zur Vereinzelung der Spargelstangen dienen sollen. Die Fördervorrichtung weist ferner Steuermittel auf, die derart ausgebildet sind, dass der Bewegung des Förderbandes in Zuführrichtung eine Schwingung in Zuführrichtung und der zu der Zuführrichtung entgegengesetzten Richtung überlagert werden kann. Durch diese überlagerten Schwingungen soll erreicht werden, dass für den Fall, dass mehr als eine Spargelstange in einer Aufnahmemulde angeordnet ist, die zusätzlichen Spargelstangen über einen die Aufnahmemulde begrenzenden Vorsprung in eine Nachbarmulde gelangen kann. Des Weiteren kann durch die überlagerten Schwingungen die Geschwindigkeit der parallel zueinander angeordneten Förderbandstreifen temporär erhöht bzw. reduziert werden, so dass die Verfahrgeschwindigkeit der Förderbandstreifen nicht konstant ist, sondern je nach überlagerter Schwingung variieren kann.

Ferner ist aus der FR 2 570 301 A1 eine Spargelsortiermaschine mit einer ein Förderband aufweisenden Spargelsortiervorrichtung und einer ein Förderband aufweisenden Zuführvorrichtung bekannt. Das Förderband der Zuführvorrichtung und das Förderband der Sortiervorrichtung werden von einem gemeinsamen Motor angetrieben, wobei der Motor mit einer variablen oder einer fest eingestellten Geschwindigkeit betrieben werden kann.

Weiterhin sind aus der DE 698 01 833 T2 eine Vorrichtung und ein Verfahren zur Teighandhabung bekannt, die ein erstes Fördermittel zum Empfang von Teig, umfassend ein erstes Entladeende zum Entladen von Teig, enthält. Ein zweites Fördermittel empfängt Teig und ist längsseits des ersten Fördermittels positioniert, um in der Richtung des ersten Fördermittels zu fördern. Das zweite Fördermittel hat ein zweites Entladeende, das in einem Abstand vom ersten Entladeende angeordnet ist. Das erste und zweite Fördermittel können verwendet werden, die Teigstücken von einem langgestreckten Teigprodukt, wie z.B. einer Rolle, zu trennen und/oder einzelne Teigstücke phasenweise anzuordnen, um diese hintereinander zum Verpacken oder zur weiteren Verarbeitung bereitzustellen. Es erfolgt somit ein Umordnen der Teigstücke aus einer Positon axial hintereinander, wie sie Teile des langgestreckten Teigprodukts sind, und entlang des ersten und des zweiten Fördermittels nebeneinander, in eine Position parallel zueinander und entlang des dritten Fördermittels hintereinander.

Aus der US 2007 0 068 772 A1 ist ein Förderbandsystem zum Vereinzeln und Ausrichten von Produkten, die in einem Entladekorb als Schüttgut ungeordnet vorliegen. Das Förderbandsystem umfasst weiterhin eine Mehrzahl von Förderbandanordnungen, die zum Empfangen der Produkte aus dem Entladekorb positioniert sind. Die Förderbandanordnungen sind linear angeordnet, um die Produkte von einer Förderbandanordnung zur nächsten hindurch zu einem Entladepunkt zu bewegen. Jede der Förderbandanordnungen weist ein in V-Form arrangiertes Paar von Förderbändern auf. Jede der Förderbandanordnungen hat ein bezüglich einer Förderrichtung oberes und ein unteres Ende. Jedes der unteren Enden ist oberhalb des oberen Endes der nächsten anschließenden Förderbandanordnung positioniert. Dabei wird jedes der Förderbänder unabhängig angetrieben. Jedes Förderband ist mit einem Gurt ausgestattet, der eine lineare Gurtgeschwindigkeit und einen Reibungskoeffizienten aufweist. Die Förderbänder jeder Förderbandanordnung weisen unterschiedliche lineare Gurtgeschwindigkeiten auf, und die Gurte wenigsten einer der Förderbandanordnungen haben unterschiedliche Reibungskoeffizienten. Beide linearen Gurtgeschwindigkeiten jeder der Förderbandanordnungen sind geringer als die linearen Gurtgeschwindigkeiten aller nachfolgenden Förderbänder. In diesem Förderbandsystem werden die Produkte axial in Förderrichtung der Förderbandanordnungen ausgerichtet.

Außerdem ist aus der DE 299 02 392 U1 eine Sortiervorrichtung für stangenförmige Lebensmittel wie Spargelstangen oder dergleichen zur Sortierung der stangenförmigen Lebensmittel bekannt, umfassend ein Fördermittel, das die zu sortierenden stangenförmigen Lebensmittel einem Messbereich zuführen kann, und eine Vereinzelungsvorrichtung für die stangenförmigen Lebensmittel, die die stangenförmigen Lebensmittel einzeln auf dem Fördermittel ablegen kann. Die Vereinzelungsvorrichtung umfasst ein Förderband für Kästen, in denen die stangenförmigen Lebensmittel aufgenommen sein können, sowie einen Flüssigkeitsbehälter mit einer Flüssigkeit, wobei die Kästen von dem Förderband in die Flüssigkeit hineintransportiert werden können, so dass die stangenförmigen Lebensmittel an die Oberfläche der Flüssigkeit schwimmen. Weiterhin umfasst die Vereinzelungsvorrichtung Greifermittel, die die im Bereich der Oberfläche der Flüssigkeit schwimmenden stangenförmigen Lebensmittel einzeln greifen und weitergeben können.

### OFFENBARUNG DER ERFINDUNG

Es ist die Aufgabe der vorliegenden Erfindung, eine Transporteinrichtung und eine Sortiermaschine zur Verfügung zu stellen, bei welchen die oben genannten Probleme vermieden werden können und insbesondere eine Mehrfachbeladung und/oder eine Nicht-Beladung in den einzelnen Aufnahmebereichen der Fördermitteleinheit der Sortierstrecke sicher verhindert bzw. die Häufigkeit des Auftretens von Mehrfach- und/oder Nicht-Beladungen verringert werden können.

Gemäß einer ersten Lehre der Erfindung wird die erfindungsgemäße Aufgabe mit einer Transporteinrichtung zum Transport von stangenartigen Gemüsen gelöst, welche mindestens eine entlang einer Förderstrecke verfahrbare, eine Vielzahl von voneinander getrennte Aufnahmebereiche zur Aufnahme der Gemüse aufweisende erste Fördermitteleinheit zum Vereinzeln der Gemüse aufweist und welche mindestens eine entlang einer Sortierstrecke verfahrbare, eine Vielzahl von voneinander getrennte Aufnahmebereiche zur Aufnahme der Gemüse aufweisende zweite Fördermitteleinheit zum Sortieren der Gemüse aufweist, wobei in einer Transportrichtung der Gemüse die zweite Fördermitteleinheit hinter der ersten Fördermitteleinheit angeordnet ist, und wobei die erste Fördermitteleinheit eine Verfahrgeschwindigkeit aufweist, welche geringer ist als eine Verfahrgeschwindigkeit der zweiten Fördermitteleinheit.

Die Transporteinrichtung umfasst eine erste Fördermitteleinheit, welche Teil einer Förderstrecke ist, und mindestens eine zweite Fördermitteleinheit, welche Teil einer Sortierstrecke ist. Die erste Fördermitteleinheit, welche Teil der Förderstrecke ist, weist bereits voneinander getrennte Aufnahmebereiche auf, durch welche bereits ein Vereinzeln der Gemüse und auch ein Ausrichten der Gemüse in die lagerichtige Position auf der ersten Fördermitteleinheit erreicht werden kann und damit bevor die Gemüse zu der Sortierstrecke gelangen. Die erste Fördermitteleinheit dient ferner dazu, die stangenartigen Gemüse, insbesondere die einzelnen Gemüsestücke, wie beispielsweise Spargelstangen oder Porreestangen, vereinzelt und lagerichtig an die zweite Fördermitteleinheit der Sortierstrecke zu übergeben, so dass im Bereich der Sortierstrecke auf der zweiten Fördermitteleinheit eine Mehrfachbeladung der einzelnen Aufnahmebereiche der zweiten Fördermitteleinheit sicher vermieden werden kann, wobei dies teil- oder vollautomatisiert erfolgen kann, d. h. dass eine notwendige manuelle Nachvereinzelung in den Aufnahmebereichen der zweiten Fördermitteleinheit der Sortierstrecke zumindest verringert werden kann, wodurch die Anzahl der notwendigen Bedienpersonen, die üblicherweise ein Vereinzeln manuell vornehmen, reduziert werden kann. Dies kann dadurch erreicht werden, dass die erste Fördermitteleinheit, welche Teil der Förderstrecke ist, und die zweite Fördermitteleinheit, welche Teil der Sortierstrecke ist, mit einer unterschiedlichen Verfahrgeschwindigkeit in Transportrichtung der Gemüse in der Transporteinrichtung verfahren werden, wobei die Verfahrgeschwindigkeit der ersten Fördermitteleinheit, welche Teil der Förderstrecke ist, geringer ist als die Verfahrgeschwindigkeit der zweiten Fördermitteleinheit, welche Teil der Sortierstrecke ist. Ferner kann die Beladungsrate der einzelnen Aufnahmebereiche der zweiten Fördermitteleinheit, welche Teil der Sortierstrecke ist, erhöht werden, da die Zahl von Aufnahmebereichen der zweiten Fördermitteleinheit, die nicht mit einem Gemüsestück bestückt werden, durch die sichere vereinzelte Übergabe der Gemüse bzw. der Gemüsestücke von der ersten Fördermitteleinheit der Förderstrecke an die zweite Fördermitteleinheit der Sortierstrecke deutlich reduziert werden kann. Insbesondere auch bei Gemüsen, welche eine geringe Dicke aufweisen, kann eine sichere vereinzelte Übergabe an die Sortierstrecke erfolgen, so dass auch bei Gemüsen mit einer geringen Dicke die Zahl von Aufnahmeelementen der zweiten Fördermitteleinheit der Sortierstrecke, die während des Betriebes der Transporteinrichtung nicht bestückt werden, deutlich reduziert werden kann.

Die voneinander getrennten Aufnahmebereiche, sowohl der ersten Fördermitteleinheit als auch der zweiten Fördermitteleinheit, können räumlich zueinander beabstandet sein oder direkt aneinander anliegen bzw. angrenzen. Die Aufnahmebereiche sind derart ausgestaltet, dass darin aufgenommene Gemüse nicht ungewollt in einen anderen Aufnahmebereich gelangen können.

Die in Transportrichtung der Gemüse hintereinander angeordnete erste Fördermitteleinheit und zweite Fördermitteleinheit können ebenfalls räumlich zueinander beabstandet sein oder direkt aneinander anliegen bzw. angrenzen. Auch ist eine teilweise Überlappung der beiden Fördermitteleinheiten möglich. Nach einer bevorzugten Ausgestaltung der Erfindung sind die Verfahrgeschwindigkeit der ersten Fördermitteleinheit und die Verfahrgeschwindigkeit der zweiten Fördermitteleinheit in einem festen Verhältnis zueinander eingestellt. Ferner sind während des Transportes der Gemüse die Verfahrgeschwindigkeit der ersten Fördermitteleinheit und die Verfahrgeschwindigkeit der zweiten Fördermitteleinheit bevorzugt jeweils konstant. Insbesondere ist es vorgesehen, dass die Verfahrgeschwindigkeit der ersten Fördermitteleinheit zu der Verfahrgeschwindigkeit der zweiten Fördermitteleinheit in einem Verhältnis von 1 zu 1,1 bis 1 zu 10, bevorzugt in einem Verhältnis von 1 zu 1,3 bis 1 zu 5, besonders bevorzugt in einem Verhältnis von 1 zu 1,5 bis 1 zu 3,5 eingestellt ist. Beispielsweise kann das Verhältnis 1 zu 2 oder 1 zu 3 sein.

Insbesondere die Verfahrgeschwindigkeit der ersten Fördermitteleinheit, welche Teil der Förderstrecke ist, auf welcher die Gemüse vereinzelt werden, weist vorzugsweise eine derart geringe Geschwindigkeit auf, dass bei einer zusätzlichen manuellen Vereinzelung der Gemüse bzw. der Gemüsestücke durch eine oder mehrere Bedienpersonen eine genauere und zuverlässigere Vereinzelung und auch Ausrichtung der Gemüse bzw. der Gemüsestücke auf der ersten Fördermitteleinheit erfolgen kann, wobei dabei auch die physischen und mentalen Anstrengungen für die Bedienpersonen aufgrund der verringerten Geschwindigkeit beim Vereinzeln und damit vor Erreichen der Sortierstrecke reduziert werden können. Insbesondere ist es vorgesehen, dass die erste Fördermitteleinheit eine Verfahrgeschwindigkeit zwischen 0,10 m/s und 0,55 m/s, bevorzugt zwischen 0,15 m/s und 0,45 m/s, aufweist und dass die zweite Fördermitteleinheit eine Verfahrgeschwindigkeit zwischen 0,30 m/s und 0,80 m/s, bevorzugt zwischen 0,50 m/s und 0,70 m/s, aufweist.

Weiter kann es nach einer bevorzugten Ausgestaltung der Erfindung vorgesehen sein, dass ein von einer Mitte eines Aufnahmebereiches der ersten Fördermitteleinheit zu einer Mitte eines benachbart dazu angeordneten Aufnahmebereiches der ersten Fördermitteleinheit gemessenes Teilungsmaß kleiner ist als ein von einer Mitte eines Aufnahmebereiches der zweiten Fördermitteleinheit zu einer Mitte eines benachbart dazu angeordneten Aufnahmebereiches der zweiten Fördermitteleinheit gemessenes Teilungsmaß. Das Teilungsmaß der Aufnahmebereiche der ersten Fördermitteleinheit, welche Teil der Förderstrecke ist, ist somit bevorzugt kleiner als das Teilungsmaß der Aufnahmebereiche der zweiten Fördermitteleinheit, welche Teil der Sortierstrecke ist, so dass die Gemüse bzw. die einzelnen Gemüsestücke bei der ersten Fördermitteleinheit in den jeweils benachbarten Aufnahmebereichen dichter beieinanderliegen als in der zweiten Fördermitteleinheit. Dies ist insbesondere in Kombination mit der langsameren Verfahrgeschwindigkeit der ersten Fördermitteleinheit gegenüber der Verfahrgeschwindigkeit der zweiten Fördermitteleinheit vorteilhaft, da dadurch eine vereinzelte Ablage der Gemüse bzw. der Gemüsestücke in den Aufnahmebereichen der zweiten Fördermitteleinheit in der Sortierstrecke noch sicherer erfolgen kann. Bevorzugt sind Teilungsmaß und Verfahrgeschwindigkeit der ersten und der zweiten Fördermitteleinheit derart aufeinander abgestimmt, dass mit der ersten und mit der zweiten Fördermitteleinheit pro Zeiteinheit im Wesentlichen dieselbe Menge an Gemüsen befördert werden kann. Sowohl die erste als auch die zweite Fördermitteleinheit kann zwischen ihren jeweiligen Aufnahmebereichen konstante Teilungsmaße oder auch unterschiedliche Teilungsmaße aufweisen, wobei es bevorzugt ist, dass für jede Fördermitteleinheit genau ein Teilungsmaß vorgesehen ist.

Das Teilungsmaß der Aufnahmebereiche der ersten Fördermitteleinheit ist vorzugsweise in Abhängigkeit des Teilungsmaßes der Aufnahmebereiche der zweiten Fördermitteleinheit eingestellt, wobei die beiden Teilungsmaße bevorzugt proportional zueinander sind. Alternativ oder zusätzlich ist die Verfahrgeschwindigkeit der ersten Fördermitteleinheit vorzugsweise in Abhängigkeit der Verfahrgeschwindigkeit der zweiten Fördermitteleinheit eingestellt, wobei die beiden Verfahrgeschwindigkeiten bevorzugt proportional zueinander sind. Ferner ist es bevorzugt, dass das Verhältnis des Teilungsmaßes der Aufnahmebereiche der ersten Fördermitteleinheit zum Teilungsmaß der Aufnahmebereiche der zweiten Fördermitteleinheit gleich ist zum Verhältnis der Verfahrgeschwindigkeit der ersten Fördermitteleinheit zu der Verfahrgeschwindigkeit der zweiten Fördermitteleinheit. Beispielsweise beträgt das Teilungsmaß der Aufnahmebereiche der ersten Fördermitteleinheit bei halber Verfahrgeschwindigkeit der ersten Fördermitteleinheit im Vergleich zu der Verfahrgeschwindigkeit der zweiten Fördermitteleinheit die Hälfte des Teilungsmaßes der Aufnahmebereiche der zweiten Fördermitteleinheit.

Weiter kann es vorgesehen sein, dass das Teilungsmaß der Aufnahmebereiche der ersten Fördermitteleinheit zu dem Teilungsmaß der Aufnahmebereiche der zweiten Fördermitteleinheit ein Verhältnis von 1 zu 1,1 bis 1 zu 10, bevorzugt ein Verhältnis von 1 zu 1,3 bis 1 zu 5, besonders bevorzugt ein Verhältnis von 1 zu 1,5 bis 1 zu 3,5 aufweist. Beispielsweise kann das Verhältnis 1 zu 2 oder 1 zu 3 sein. Das Teilungsmaß der Aufnahmebereiche der ersten Fördermitteleinheit kann zwischen 10 mm und 50 mm, bevorzugt zwischen 15 mm und 40 mm, besonders bevorzugt zwischen 20 mm und 35 mm, betragen. Das Teilungsmaß der Aufnahmebereiche der zweiten Fördermitteleinheit kann zwischen 35 mm und 70 mm, bevorzugt zwischen 40 mm und 60 mm, besonders bevorzugt zwischen 45 mm und 55 mm, betragen.

Gemäß einer weiter bevorzugten Ausgestaltung der Erfindung kann es vorgesehen sein, dass die Aufnahmebereiche der ersten Fördermitteleinheit durch von einer Auflagefläche der ersten Fördermitteleinheit hervorstehende Trennelemente, insbesondere Trennstege oder Trennnoppen, voneinander getrennt sind und/oder dass die Aufnahmebereiche der zweiten Fördermitteleinheit durch von einer Auflagefläche der zweiten Fördermitteleinheit hervorstehende Trennelemente, insbesondere Trennstege oder Trennoppen, voneinander getrennt sind. Die Auflagefläche ist die Fläche der ersten und/oder zweiten Fördermitteleinheit, auf welcher die Gemüse zum Transport auf der ersten und/oder der zweiten Fördermitteleinheit aufliegen. Sind die Aufnahmebereiche durch in einem bestimmten Abstand zueinander angeordnete Trennelemente voneinander abgegrenzt, ist die Auflagefläche vorzugsweise flach ausgebildet und weist vorzugsweise keine zusätzlichen Einwölbungen in Form von beispielsweise Mulden auf, in welchen die Gemüse angeordnet sind. Die jeweils zwischen zwei benachbarten Trennelementen angeordnete Auflagefläche bildet zweckmäßig einen Aufnahmebereich. Entsprechend sind jedem Aufnahmebereich mindestens zwei Trennelemente zugeordnet, wobei ein Trennelement einem oder auch mehreren Aufnahmebereichen (beispielsweise zwei) zugeordnet sein kann.

Alternativ zu den Trennelementen ist es auch möglich, dass die Aufnahmebereiche der ersten Fördermitteleinheit durch voneinander getrennt angeordnete Aufnahmebehältnisse, insbesondere Schalen oder Mulden, ausgebildet sind und/oder dass die Aufnahmebereiche der zweiten Fördermitteleinheit durch voneinander getrennt angeordnete Aufnahmebehältnisse, insbesondere Schalen oder Mulden, ausgebildet sind. Grundsätzlich könnten auch bei einer Fördermitteleinheit sowohl Auflageflächen als auch Aufnahmebehältnisse vorgesehen sein, wobei es zweckmäßig ist, pro Fördermitteleinheit jeweils ausschließlich mit Auflageflächen oder mit Aufnahmebehältnissen gebildete Aufnahmebereiche vorzusehen.

Eine weiter bevorzugte Ausgestaltung der Erfindung sieht vor, dass die erste Fördermitteleinheit von einer Antriebseinheit, insbesondere einem Antriebsmotor, der zweiten Fördermitteleinheit angetrieben ist. Ferner ist eine Synchronisationseinheit vorgesehen, mittels derer die Verfahrgeschwindigkeit der ersten Fördermitteleinheit anpassbar, d.h. einstellbar und/oder vorgebbar, ist. Grundsätzlich wäre auch eine umgekehrte Anordnung denkbar, bei die zweite Fördermitteleinheit von einer Antriebseinheit der ersten Fördermitteleinheit antreibbar ist. Entscheidend ist bei beiden Varianten, dass eine gemeinsame Antriebseinheit für beide Fördermitteleinheiten vorgesehen ist. Durch eine gemeinsame Antriebseinheit muss keine zusätzliche Antriebseinheit für die erste Fördermitteleinheit vorgesehen werden, wodurch die Anzahl der Bauteile der Transporteinrichtung und damit auch die Kosten bei der Herstellung der Transporteinrichtung reduziert werden können. Um eine genaue Übergabe der einzelnen Gemüse bzw. Gemüsestücke von der ersten Fördermitteleinheit zu der zweiten Fördermitteleinheit gewährleisten zu können, ist bei einer gemeinsamen Antriebseinheit vorzugsweise eine Synchronisationseinheit vorgesehen. Die Synchronisationseinheit stellt eine geeignete feste Übersetzung bzw. ein geeignetes festes Übersetzungsverhältnis des Antriebes der zweiten Fördermitteleinheit und damit der Verfahrgeschwindigkeit der zweiten Fördermitteleinheit zu dem Antrieb der ersten Fördermitteleinheit und damit der Verfahrgeschwindigkeit der ersten Fördermitteleinheit sicher. Das Übersetzungsverhältnis kann verstellbar oder auch fest sein. Alternativ zu der Nutzung einer gemeinsamen Antriebseinheit der ersten Fördermitteleinheit mit der zweiten Fördermitteleinheit ist es aber auch möglich, dass die erste Fördermitteleinheit und die zweite Fördermitteleinheit jeweils getrennt voneinander angeordnete und arbeitende Antriebseinheiten aufweisen, wobei dann beide Antriebseinheiten zweckmäßigerweise jeweils mit konstanter Leistung betrieben werden.

Bei einer gemeinsamen Nutzung einer Antriebseinheit kann die Synchronisationseinheit elektrisch und/oder mechanisch steuerbar sein. Bei einer mechanischen Steuerung kann eine mechanische Übersetzung, beispielsweise mittels eines Zahnradgetriebes oder dergleichen, ausgebildet sein. Bei einer gemeinsamen Antriebseinheit und einer dieser zugeordneten Synchronisationseinheit ist vorzugsweise keine Einzelsteuerbarkeit der ersten Fördermitteleinheit vorgesehen.

Gemäß einer weiter bevorzugten Ausgestaltung der Erfindung ist in einem Übergabebereich der ersten Fördermitteleinheit zu der zweiten Fördermitteleinheit, in dem Gemüse von der ersten Fördermitteleinheit an die zweite Fördermitteleinheit übergeben werden, die erste Fördermitteleinheit höhenversetzt zu der zweiten Fördermitteleinheit, insbesondere mit einer in Transportrichtung der Gemüse abnehmenden Höhe, angeordnet. Hierdurch kann die Übergabe der Gemüse bzw. der Gemüsestücke von der ersten Fördermitteleinheit zu der zweiten Fördermitteleinheit und damit von der Förderstrecke zu der Sortierstrecke vereinfacht werden. Insbesondere bei einer Anordnung der ersten Fördermitteleinheit im Übergabebereich höher als die zweite Fördermitteleinheit können die Gemüse bzw. die Gemüsestücke ohne weitere Hilfsmittel von der ersten Fördermitteleinheit auf die Fördermitteleinheit aufgebracht, insbesondere fallengelassen, werden, um auf der zweiten Fördermitteleinheit weiter durch die Sortierstrecke transportiert werden zu können. Das heißt, in Transportrichtung gesehen ist der Endbereich der ersten Fördermitteleinheit bevorzugt über dem Anfangsbereich der zweiten Fördermitteleinheit angeordnet. Der Höhenversatz ist derart zu wählen, dass die Gemüse beim Übergang von der ersten zur zweiten Fördermitteleinheit nicht beschädigt werden.

Nach einer anderen vorteilhaften Ausgestaltung ist die erfindungsgemäße Transporteinrichtung dadurch gekennzeichnet, dass in einem Übergabebereich der ersten Fördermitteleinheit zu der zweiten Fördermitteleinheit, in dem Gemüse von der ersten Fördermitteleinheit an die zweite Fördermitteleinheit übergeben werden, die erste Fördermitteleinheit in Transportrichtung der Gemüse überlappt mit der zweiten Fördermitteleinheit, insbesondere höhengleich überlappt, angeordnet. Das Überlappen der Fördermitteleinheiten bedeutet, dass diese im Übergabebereich nicht nur aneinander angrenzen, sondern ineinandergreifen, insbesondere mit ihren Außenkonturen oder Wirkungsbereichen, d.h. den Raumbereichen, die die Fördermittel im Betrieb einnehmen, ausfüllen bzw. überstreichen. Dies ermöglicht eine noch präzisere Ausführung des Übergabevorgangs für die Gemüse bzw. Gemüsestücke von der ersten Fördermitteleinheit zu der zweiten Fördermitteleinheit als ein Fallenlassen der Gemüse bzw. Gemüsestücke von der ersten Fördermitteleinheit zu der zweiten Fördermitteleinheit. Dies ist ein bedeutender Vorteil im Hinblick auf die Lösung der Aufgabe, eine Mehrfachbeladung und/oder eine Nicht-Beladung in den einzelnen Aufnahmebereichen der Fördermitteleinheit der Sortierstrecke sicher zu verhindern bzw. die Häufigkeit des Auftretens von Mehrfach- und/oder Nicht-Beladungen zu verringern. Außerdem wird durch ein vollständiges Vermeiden des Fallenlassens der Gemüse bzw. Gemüsestücke von der ersten Fördermitteleinheit zu der zweiten Fördermitteleinheit eine hierdurch gegebene Möglichkeit einer Beschädigung der Gemüse bzw. Gemüsestücke von vornherein ausgeschlossen.

In einer noch anderen Ausgestaltung der erfindungsgemäßen Transporteinrichtung ist in einem Übergabebereich der ersten Fördermitteleinheit zu der zweiten Fördermitteleinheit, in dem Gemüse von der ersten Fördermitteleinheit an die zweite Fördermitteleinheit übergeben werden, ein entlang einer Förderstrecke verfahrbares, eine Vielzahl von voneinander getrennten Aufnahmebereichen zur Aufnahme der Gemüse aufweisendes Übergabefördermittel zum Übergeben der Gemüse von der ersten Fördermitteleinheit an die zweite Fördermitteleinheit angeordnet, wobei das Übergabefördermittel eine Verfahrgeschwindigkeit aufweist, welche größer ist als die Verfahrgeschwindigkeit der ersten Fördermitteleinheit und welche geringer ist als die Verfahrgeschwindigkeit der zweiten Fördermitteleinheit. Durch dieses Übergabefördermittel erfolgt eine geführte Übergabe der Gemüse bzw. Gemüsestücke von der ersten Fördermitteleinheit an die zweite Fördermitteleinheit, so dass dadurch ebenfalls Rutschen oder freies Fallen der Gemüse bzw. Gemüsestücke ausgeschlossen sind. Dadurch wird das zu fördernde Gemüse bzw. werden die zu fördernden Gemüsestücke geschont und besonders sorgfältig vor Beschädigungen geschützt, wodurch die Qualität der Bearbeitung des Gemüses und damit die Lieferqualität des Gemüses selbst erhöht wird. Außerdem wird durch diese Maßnahme ebenfalls eine Mehrfachbeladung und/oder eine Nicht-Beladung in den einzelnen Aufnahmebereichen der Fördermitteleinheit der Sortierstrecke sicher verhindert bzw. die Häufigkeit des Auftretens von Mehrfach- und/oder Nicht-Beladungen zuverlässig verringert. Bevorzugt ist das Übergabefördermittel mit Aufnahmebereichen für die Gemüse bzw. Gemüsestücke ausgebildet, die weiter bevorzugt wie bei der ersten und/oder der zweiten Fördermitteleinheit mit Aufnahmebehältnissen gebildet und/oder durch Trennelemente voneinander getrennt ausgeführt sein können. In einer anderen vorteilhaften Ausgestaltung kann das Übergabefördermittel in der Form eines Zackenrades ausgebildet sein.

Nach einer weiteren Ausgestaltung der erfindungsgemäßen Transporteinrichtung ist das Übergabefördermittel in Transportrichtung der Gemüse einerseits überlappt mit der ersten Fördermitteleinheit, insbesondere höhengleich überlappt, angeordnet, und/oder ist das Übergabefördermittel in Transportrichtung der Gemüse anderseits überlappt mit der zweiten Fördermitteleinheit, insbesondere höhengleich überlappt, angeordnet. Mit dieser Ausgestaltung, die der zuvor beschriebenen Ausgestaltung der Überlappung der ersten Fördermitteleinheit mit der zweiten Fördermitteleinheit gleicht, werden dieselben dort im einzelnen aufgeführten Vorteile erzielt.

In einer vorteilhaften Fortbildung der erfindungsgemäßen Transporteinrichtung ist ein von einer Mitte eines Aufnahmebereiches des Übergabefördermittels zu einer Mitte eines benachbart dazu angeordneten Aufnahmebereiches des Übergabefördermittels gemessenes Teilungsmaß größer als ein von einer Mitte eines Aufnahmebereiches der ersten Fördermitteleinheit zu einer Mitte eines benachbart dazu angeordneten Aufnahmebereiches der ersten Fördermitteleinheit gemessenes Teilungsmaß und kleiner als ein von einer Mitte eines Aufnahmebereiches der zweiten Fördermitteleinheit zu einer Mitte eines benachbart dazu angeordneten Aufnahmebereiches der zweiten Fördermitteleinheit gemessenes Teilungsmaß. Entsprechend der Wahl des Teilungsmaßes der Aufnahmebereiche der ersten Fördermitteleinheit zu dem Teilungsmaß der Aufnahmebereiche der zweiten Fördermitteleinheit im vorstehenden ist das Teilungsmaß der Aufnahmebereiche des Übergabefördermittels vorzugsweise in Abhängigkeit des Teilungsmaßes der Aufnahmebereiche der ersten Fördermitteleinheit und der zweiten Fördermitteleinheit eingestellt, wobei die drei Teilungsmaße bevorzugt proportional zueinander sind. Alternativ oder zusätzlich ist die Verfahrgeschwindigkeit des Übergabefördermittels vorzugsweise in Abhängigkeit der Verfahrgeschwindigkeit der ersten Fördermitteleinheit und der zweiten Fördermitteleinheit eingestellt, wobei die drei Verfahrgeschwindigkeiten bevorzugt proportional zueinander sind.

Ferner ist es bevorzugt, dass die Verhältnisse der Teilungsmaße der Aufnahmebereiche der ersten Fördermitteleinheit, des Übergabefördermittels und der zweiten Fördermitteleinheit zueinander gleich sind zu den Verhältnissen der Verfahrgeschwindigkeiten der ersten Fördermitteleinheit, des Übergabefördermittels und der zweiten Fördermitteleinheit zueinander. Beträgt z.B. das Teilungsmaß der Aufnahmebereiche der ersten Fördermitteleinheit bei halber Verfahrgeschwindigkeit der ersten Fördermitteleinheit im Vergleich zu der Verfahrgeschwindigkeit der zweiten Fördermitteleinheit die Hälfte des Teilungsmaßes der Aufnahmebereiche der zweiten Fördermitteleinheit, und ist für die Verfahrgeschwindigkeit des Übergabefördermittels ein mittlerer Wert zwischen den Verfahrgeschwindigkeiten der ersten Fördermitteleinheit und der zweiten Fördermitteleinheit gewählt, nimmt auch das Teilungsmaß der Aufnahmebereiche des Übergabefördermittels einen mittleren Wert zwischen den Teilungsmaßen der Aufnahmebereiche der ersten Fördermitteleinheit und der zweiten Fördermitteleinheit an.

Die erste Fördermitteleinheit weist vorzugsweise ein erstes entlang einer Strecke der Förderstrecke verfahrbares Fördermittel und mindestens ein zweites entlang einer Strecke der Förderstrecke verfahrbares Fördermittel auf, wobei das zweite Fördermittel in Transportrichtung der Gemüse bevorzugt hinter dem ersten Fördermittel angeordnet ist. Die mehreren Fördermittel der Fördermitteleinheit der Förderstrecke, wobei die Fördermitteleinheit mehr als zwei Fördermittel aufweisen kann, sind vorzugsweise hintereinander angeordnet, so dass beim Transport der Gemüse die Gemüse von dem ersten Fördermittel an das zweite Fördermittel und an eventuell weiter nachfolgende Fördermittel übergeben werden können, wobei von dem letzten Fördermittel der bevorzugt in Reihe hintereinander angeordneten Fördermittel der ersten Fördermitteleinheit die Gemüse an die zweite Fördermitteleinheit der Sortierstrecke übergeben werden. Jedes Fördermittel weist eine Vielzahl von voneinander getrennten Aufnahmebereichen zur Aufnahme der Gemüse auf. Die Strecken entlang derer die Fördermittel jeweils verfahr sind, sind bevorzugt jeweils Teilstrecken der Förderstrecken. Entsprechend sind die Strecken zweckmäßig auch jeweils kürzer als die Förderstrecke. Die Fördermittel können räumlich getrennt voneinander oder jeweils angrenzend oder anliegend zueinander angeordnet sein. Es ist auch eine Überlappung von Fördermitteln, insbesondere in Transportrichtung gesehen, möglich. Die Anordnung untereinander muss eine Übergabe der Gemüse zwischen den Fördermitteln erlauben.

Die mehreren Fördermittel sind vorzugsweise mit einer konstanten Verfahrgeschwindigkeit verfahrbar, wobei sie jedoch vorzugsweise mit jeweils voneinander unterschiedlichen Verfahrgeschwindigkeiten entlang ihrer Strecke verfahrbar sind. Die Verfahrgeschwindigkeit der Fördermittel nimmt dabei von dem ersten Fördermittel hin zu dem letzten in der Reihe angeordneten Fördermittel, welches an die zweite Fördermitteleinheit der Sortierstrecke angrenzt, zu, so dass das erste Fördermittel bevorzugt eine Verfahrgeschwindigkeit aufweist, welche kleiner ist als eine Verfahrgeschwindigkeit eines nachfolgenden zweiten Fördermittels.

Die unterschiedlichen Verfahrgeschwindigkeiten der Fördermittel sind vorzugsweise derart eingestellt, dass die Verfahrgeschwindigkeit des ersten Fördermittels zu der Verfahrgeschwindigkeit des zweiten Fördermittels ein Verhältnis von 1 zu 1,2 bis 1 zu 5, bevorzugt von 1 zu 1,4 bis 1 zu 3,5, besonders bevorzugt von 1 zu 1,6 bis 1 zu 2,5 aufweist. Beispielsweise kann das Verhältnis 1 zu 2 oder 1 zu 3 sein. Sind mehr als zwei Fördermittel vorgesehen, so kann auch das Verhältnis der Verfahrgeschwindigkeiten der Fördermittel derart eingestellt sein, dass das Verhältnis der Verfahrgeschwindigkeit eines in Transportrichtung vor einem benachbarten Fördermittel angeordneten Fördermittels zu der Verfahrgeschwindigkeit des benachbarten Fördermittels eines der vorgenannten Verhältnisse beträgt. Der Unterschied der Verfahrgeschwindigkeiten der hintereinander angeordneten Fördermittel ist vorzugsweise jeweils gleich groß, so dass eine konstante Steigerung der Verfahrgeschwindigkeiten in Transportrichtung zwischen zwei benachbart angeordneten Fördermitteln vorgesehen ist. Vorzugsweise weisen das erste Fördermittel eine Verfahrgeschwindigkeit zwischen 0,10 m/s und 0,40 m/s, bevorzugt zwischen 0,15 m/s und 0,30 m/s, und dass das zweite Fördermittel eine Verfahrgeschwindigkeit zwischen 0,15 m/s und 0,55 m/s, bevorzugt zwischen 0,25 m/s und 0,45 m/s auf.

Ferner können sich die Aufnahmebereiche der unterschiedlichen Fördermittel der ersten Fördermitteleinheit in ihrem Teilungsmaß voneinander unterscheiden, wobei sich die Teilungsmaße der Aufnahmebereiche der unterschiedlichen Fördermittel vorzugsweise derart unterscheiden, dass die Aufnahmebereiche des ersten Fördermittels ein Teilungsmaß aufweisen, welches kleiner ist als ein Teilungsmaß der Aufnahmebereiche eines zweiten, nachfolgenden Fördermittels. Die Teilungsmaße werden auch hier jeweils von der Mitte eines Aufnahmebereichs zur Mitte eines benachbarten Aufnahmebereichs in Transportrichtung bzw. entgegen der Transportrichtung gemessen. Das Teilungsmaß der Aufnahmebereiche der Fördermittel nimmt somit bevorzugt von dem ersten Fördermittel hin zu dem letzten in der Reihe angeordneten Fördermittel, welches an die zweite Fördermitteleinheit der Sortierstrecke angrenzt, zu. Hierdurch kann die Vereinzelung der Gemüse in der Förderstrecke weiter verbessert werden.

Dabei kann das Teilungsmaß der Aufnahmebereiche der Fördermittel vorzugsweise derart eingestellt sein, dass das Teilungsmaß der Aufnahmebereiche des ersten Fördermittels zu dem Teilungsmaß der Aufnahmebereiche des zweiten Fördermittels ein Verhältnis von 1 zu 1,2 bis 1 zu 5, bevorzugt von 1 zu 1,4 bis 1 zu 3,5, besonders bevorzugt von 1 zu 1,6 bis 1 zu 2,5 aufweist. Beispielsweise kann das Teilungsmaß 1 zu 2 oder 1 zu 3 sein. Sind mehr als zwei Fördermittel vorgesehen, so kann auch das Verhältnis der Teilungsmaße der Aufnahmebereiche der einzelnen Fördermittel derart eingestellt sein, dass das Verhältnis des Teilungsmaßes der Aufnahmebereiche eines in Transportrichtung vor einem benachbart angeordneten Fördermittel angeordneten Fördermittels zu dem Teilungsmaß der Aufnahmebereiche des benachbart angeordneten Fördermittels einem der vorgenannten Verhältnisse entspricht. Der Unterschied der Teilungsmaße der Aufnahmebereiche der hintereinander angeordneten Fördermittel ist vorzugsweise jeweils gleich groß, so dass eine konstante Reduzierung der Teilungsmaße der Aufnahmebereiche der Fördermittel in Transportrichtung zwischen zwei benachbart angeordneten Fördermitteln vorgesehen ist. Vorzugsweise beträgt das Teilungsmaß der Aufnahmebereiche des ersten Fördermittels zwischen 10 mm und 30 mm, bevorzugt zwischen 15 mm und 25 mm, ist, und das Teilungsmaß der Aufnahmebereiche des zweiten Fördermittels beträgt zwischen 20 mm und 45 mm, bevorzugt zwischen 25 mm und 35 mm.

Die Fördermittel können über jeweils eine separate Antriebseinheit einzeln angetrieben sein. Bevorzugt ist es jedoch vorgesehen, dass alle Fördermittel der ersten Fördermitteleinheit von der Antriebseinheit der zweiten Fördermitteleinheit der Sortierstrecke angetrieben werden bzw. dass die zweite Fördermitteleinheit und sämtliche Fördermittel der ersten Fördermitteleinheit eine einzige gemeinsame Antriebseinheit aufweisen. Werden die Fördermittel von einer Antriebseinheit, insbesondere der Antriebseinheit der Sortierstrecke, angetrieben, ist es vorzugsweise vorgesehen, dass zwischen dem ersten Fördermittel und dem zweiten Fördermittel eine Synchronisationseinheit angeordnet ist, welche mechanisch und/oder elektrisch steuerbar ist. Bei einer mechanischen Steuerung kann eine mechanische Übersetzung beispielsweise mittels eines Zahnradgetriebes oder dergleichen ausgebildet sein. Die Fördermittel sind bei einer zwischen zwei benachbart angeordneten Fördermitteln angeordneten Synchronisationseinheit vorzugsweise nicht einzeln ansteuerbar, insbesondere wenn die Fördermittel mit einer fest eingestellten Übersetzung von der Antriebseinheit der Sortierstrecke angetrieben werden. Die Synchronisation zwischen zwei benachbart angeordneten Fördermitteln ist vorzugsweise derart eingestellt, dass eine exakte Übergabe der einzelnen Gemüse bzw. Gemüsestücke zwischen den einzelnen Fördermitteln und auch von dem letzten in der Reihe angeordneten Fördermittel an die zweite Fördermitteleinheit der Sortierstrecke erfolgen kann. Alternativ kann auch vorgesehen sein, dass zwischen der Antriebseinheit der zweiten Fördermitteleinheit und jedem Fördermittel der ersten Fördermitteleinheit jeweils eine Synchronisationseinheit vorgesehen ist.

In einem Übergabebereich zwischen dem ersten Fördermittel und dem zweiten Fördermittel ist das erste Fördermittel zu dem zweiten Fördermittel höhenversetzt, insbesondere das erste Fördermittel höher als das zweite Fördermittel, d.h. über dem zweiten Fördermittel, angeordnet. Sind mehr als zwei Fördermittel vorgesehen, nimmt vorzugsweise die Höhe der Fördermittel in Richtung zu der zweiten Fördermitteleinheit der Sortierstrecke ab, so dass die Fördermittel der ersten Fördermitteleinheit der Förderstrecke untereinander und auch zu der zweiten Fördermitteleinheit der Sortierstrecke kaskadenförmig angeordnet sind.

Nach einer anderen bevorzugten Ausgestaltung der erfindungsgemäßen Transporteinrichtung ist in einem Übergabebereich zwischen dem ersten Fördermittel und dem zweiten Fördermittel das erste Fördermittel in Transportrichtung der Gemüse überlappt mit dem zweiten Fördermittel, insbesondere höhengleich überlappt, angeordnet. Ausführung und Vorteile dieser Ausgestaltung ergeben sich in einer zu den vorbeschriebenen Überlappungen entsprechenden Weise.

Eine weiter bevorzugte Ausgestaltung der Erfindung sieht vor, dass die Transporteinrichtung eine in Transportrichtung der Gemüse vor der ersten Fördermitteleinheit angeordnete, entlang einer Aufgabestrecke verfahrbare Aufgabefördermitteleinheit zur, insbesondere manuellen, Aufgabe der Gemüse aufweist, wobei die Aufgabefördermitteleinheit vorzugsweise eine Verfahrgeschwindigkeit aufweist, welche kleiner ist als die Verfahrgeschwindigkeit der ersten Fördermitteleinheit. Die erste Fördermitteleinheit ist zwischen der Aufgabefördermitteleinheit und der zweiten Fördermitteleinheit angeordnet, so dass die Förderstrecke mit der ersten Fördermitteleinheit eine Zwischenförderstrecke zwischen der Aufgabeförderstrecke und der Sortierstrecke ausbildet, welche im Wesentlichen die Aufgabe des Vereinzeln der in der Aufgabestrecke auf die Aufgabefördermitteleinheit aufgegebenen Gemüse hat, bevor diese an die Sortierstrecke auf die zweite Fördermitteleinheit übergeben werden. Die Aufgabe der Gemüse erfolgt somit bei dieser Ausgestaltung nicht auf der ersten Fördermitteleinheit und somit auch nicht in der Förderstrecke, sondern auf der Aufgabefördermitteleinheit in der Aufgabestrecke, welcher der Förderstrecke in Transportrichtung vorgelagert ist. Die Aufgabefördermitteleinheit kann insbesondere ein flaches Transportband oder dergleichen aufweisen, das keinerlei Trennung oder Separierungen vorsieht, sondern eine durchgehende Fläche bildet, auf die die Gemüse aufgelegt werden können.

In einer vorteilhaften Weiterbildung der erfindungsgemäßen Transporteinrichtung ist in einem Übergabebereich der Aufgabefördermitteleinheit zu der ersten Fördermitteleinheit, in dem Gemüse von der Aufgabefördermitteleinheit an die erste Fördermitteleinheit übergeben werden, die Aufgabefördermitteleinheit höhenversetzt zu der ersten Fördermitteleinheit, insbesondere mit einer in Transportrichtung der Gemüse abnehmenden Höhe, angeordnet. Ausgestaltungen und Vorteile ergeben sich in einer den vorbeschriebenen Höhenversätzen, z.B. zwischen der ersten und der zweiten Fördermitteleinheit oder dem ersten und dem zweiten Fördermittel, entsprechenden Weise.

Nach einer anderen Ausgestaltung der erfindungsgemäßen Transporteinrichtung ist in einem Übergabebereich der Aufgabefördermitteleinheit zu der ersten Fördermitteleinheit, in dem Gemüse von der Aufgabefördermitteleinheit an die erste Fördermitteleinheit übergeben werden, die Aufgabefördermitteleinheit in Transportrichtung der Gemüse überlappt mit der ersten Fördermitteleinheit, insbesondere höhengleich überlappt, angeordnet. Auch hier ergeben sich Ausgestaltungen und Vorteile in einer den vorbeschriebenen Überlappungen, z.B. zwischen der ersten und der zweiten Fördermitteleinheit oder zwischen der ersten und der zweiten Fördermitteleinheit einerseits und dem Übergabefördermittel andererseits, entsprechenden Weise.

Gemäß einer noch anderen Ausgestaltung der erfindungsgemäßen Transporteinrichtung sind die Aufgabefördermitteleinheit und die erste Fördermitteleinheit und/oder die erste Fördermitteleinheit und die zweite Fördermitteleinheit und/oder die erste Fördermitteleinheit und das Übergabefördermittel und/oder das Übergabefördermittel und die zweite Fördermitteleinheit und/oder das erste Fördermittel und das zweite Fördermittel mit einer oder mehreren parallel zueinander verlaufenden Förderketten und/oder einem oder mehreren parallel zueinander verlaufenden Förderbändern ausgebildet, auf denen die Aufnahmebereiche angeordnet sind. Dabei ist das Überlappen der vorstehend aufgeführten, unterschiedlichen Fördermittel und/oder Fördermitteleinheiten miteinander dadurch bewirkt, dass das eine oder die mehreren Förderbänder und/oder die eine oder mehreren Förderketten des einen und des anderen der überlappenden Fördermittel und/oder der einen und der anderen der überlappenden Fördermitteleinheiten abwechselnd nebeneinander angeordnet sind. Insbesondere sind das eine der Fördermittel und/oder die eine der Fördermitteleinheiten mit einem Förderband oder einer Förderkette und das andere der Fördermittel und/oder die andere der Fördermitteleinheiten mit zwei Förderbändern und/oder Förderketten ausgebildet und ist je eines der beiden Förderbänder und/oder Förderketten an je einer Seite neben dem einen Förderband oder der einen Förderkette angeordnet.

Bei dieser Ausgestaltung ist somit die gegenseitige Überlappung der Fördermittel bzw. Fördermitteleinheiten durch eine Verschachtelung der zugehörigen Förderbänder und/oder Förderketten erhalten. Bevorzugt sind die Förderbänder und/oder Förderketten im Bereich der Überlappungen bzw. Verschachtelungen, d.h. an einander zugewandten Enden der Fördermittel bzw. Fördermitteleinheiten über Rollen, Umlenkräder oder dergleichen geführt, und in einer besonders bevorzugten Ausführung sind diese Rollen bzw. Umlenkräder der einander überlappenden Fördermittel bzw. Fördermitteleinheiten auf einer gemeinsamen Welle angeordnet. Dadurch wird auf einfache Weise eine präzise Ausrichtung der Fördermittel bzw. Fördermitteleinheiten zueinander erhalten, wodurch eine sichere Betriebsweise gewährleistet ist. Außerdem wird eine einfache und kostengünstige Konstruktion erhalten, indem z.B. eine Welle eingespart werden kann.

In einer bevorzugten Weiterbildung der erfindungsgemäßen Transporteinrichtung sind eines oder mehrere der Fördermittel und/oder Fördermitteleinheiten mit wenigstens zwei parallel zueinander verlaufenden Förderketten und/oder Förderbändern ausgebildet. Bei wenigstens einem des einen oder der mehreren der Fördermittel und/oder Fördermitteleinheiten ist nur eine Teilanzahl der parallel zueinander verlaufenden Förderketten und/oder Förderbänder mit die Aufnahmebereiche voneinander trennenden Trennelementen, insbesondere Trennstegen oder Trennnoppen, und/oder Aufnahmebehältnissen, insbesondere Schalen oder Mulden, ausgebildet. Die übrigen der parallel zueinander verlaufenden Förderketten und/oder Förderbänder weisen eine durchgehende Auflagefläche auf. Die eine durchgehende Auflagefläche aufweisenden Förderketten und/oder Förderbänder weisen eine Verfahrgeschwindigkeit auf, die gegenüber der Verfahrgeschwindigkeit der mit Trennelementen und/oder Aufnahmebehältnissen ausgebildeten Förderketten und/oder Förderbänder um so viel größer oder geringer, bevorzugt gerade eben um so viel größer oder geringer, ist, dass die zu fördernden stangenartigen Gemüse beim Fördern zuverlässig an den Trennelementen und/oder an die Aufnahmebehältnisse gegeneinander abgrenzenden Wandungen anliegen.

In der Transportrichtung der Gemüse bzw. Gemüsestücke gesehen werden die zu fördernden stangenartigen Gemüse beim Fördern gegen die vorderen Trennelemente bzw. Wandungen der Aufnahmebereiche angelegt, wenn die eine durchgehende Auflagefläche aufweisenden Förderketten und/oder Förderbänder eine Verfahrgeschwindigkeit aufweisen, die gegenüber der Verfahrgeschwindigkeit der mit Trennelementen und/oder Aufnahmebehältnissen ausgebildeten Förderketten und/oder Förderbänder größer ist, da die eine durchgehende Auflagefläche aufweisenden Förderketten und/oder Förderbänder dann die Gemüse schneller zu fördern bestrebt sind als die mit Trennelementen und/oder Aufnahmebehältnissen ausgebildeten Förderketten und/oder Förderbänder und somit die Gemüse nach vorn ziehen. Ist dagegen die Verfahrgeschwindigkeit der eine durchgehende Auflagefläche aufweisenden Förderketten und/oder Förderbänder geringer als die Verfahrgeschwindigkeit der mit Trennelementen und/oder Aufnahmebehältnissen ausgebildeten Förderketten und/oder Förderbänder, werden die zu fördernden stangenartigen Gemüse beim Fördern gegen die in der Transportrichtung der Gemüse bzw. Gemüsestücke gesehen hinteren Trennelemente bzw. Wandungen der Aufnahmebereiche angelegt.

Der beschriebene Unterschied der Verfahrgeschwindigkeiten wird dabei so groß gewählt, dass ein Anlegen der Gemüse an die Trennelemente bzw. Wandungen der Aufnahmebereiche sicher erfolgt, aber auch unter Einhaltung dieser Wirkung so gering wie möglich, um eine Beschädigung der Gemüse auszuschließen. In dieser Bedeutung ist die eine der Verfahrgeschwindigkeiten gerade eben um so viel größer oder geringer gewählt als die andere Verfahrgeschwindigkeit, dass das gewünschte Anliegen der Gemüse an den Trennelementen bzw. Wandungen der Aufnahmebehältnisse zuverlässig, d.h. sicher und ohne Ausnahme im Betrieb erreicht wird, d.h. gewährleistet ist. Als durchgehende Auflagefläche ist dabei eine nicht durch Trennelemente oder Aufnahmebehältnisse unterteilte und vorzugsweise völlig ebene Auflagefläche bezeichnet. Der beschriebene Unterschied in den Verfahrgeschwindigkeiten ist bevorzugt erzielt durch entsprechend diesem Unterschied gewählte Dimensionierung von Antriebsrollen bzw. Riemenscheiben im Antrieb der unterschiedlichen Förderketten und/oder Förderbänder, wobei z.B. eine Riemenscheibe für einen Antriebsriemen für die langsamere der Förderketten bzw. das langsamere der Förderbänder dem gewünschten Unterschied der Verfahrgeschwindigkeiten entsprechend größer gewählt ist als eine Riemenscheibe für einen Antriebsriemen für die schnellere der Förderketten bzw. das schnellere der Förderbänder.

Durch die mit der beschriebenen Maßnahme erzielte, definierte Lage der Gemüse, z.B. Spargelstangen, in den Aufnahmebereichen, z.B. stets an den hinteren Trennelementen bzw. den hinteren Wandungen der Aufnahmebehältnisse, ist eine noch präzisere, definierte Übergabe zwischen den Fördermitteln bzw. Fördermitteleinheiten gewährleistet. Damit wird eine noch zuverlässigere Vereinzelung der Gemüse und eine noch schonendere Behandlung erzielt.

Gemäß einer zweiten Lehre der Erfindung wird die erfindungsgemäße Aufgabe mit einer Sortiermaschine für stangenartige Gemüse, wie Spargel oder Porree, gelöst, welche eine wie vorstehend beschriebene, aus- und/oder weitergebildete Transporteinrichtung zum Transport der (stangenartigen) Gemüse durch die Sortiermaschine aufweist. Die Sortiermaschine weist eine Förderstrecke und eine Sortierstrecke und gegebenenfalls eine Aufgabestrecke auf, wobei bei dem Vorsehen einer Aufgabestrecke die Förderstrecke zwischen der Aufgabestrecke und der Sortierstrecke angeordnet ist. Die Transporteinrichtung erstreckt sich dann über die Aufgabestrecke, die Förderstrecke und die Sortierstrecke. In der Aufgabestrecke werden die stangenartigen Gemüse auf die Transporteinrichtung aufgegeben, in der Förderstrecke auf der Transporteinrichtung vereinzelt und in der Sortierstrecke auf der Transporteinrichtung sortiert, wobei durch die erfindungsgemäße Ausgestaltung der Transporteinrichtung eine effektive Sortierung der Gemüse in der Sortierstrecke und damit in der Sortiermaschine durch eine optimale Vereinzelung der Gemüse in der Förderstrecke erreicht werden kann. Besonders bevorzugt kann die Sortiervorrichtung als Spargelsortiervorrichtung ausgebildet sein.

### BEVORZUGTE AUSFÜHRUNGSBEISPIELE

Die Erfindung wird nachstehend anhand der Beschreibung eines in den Figuren dargestellten bevorzugten Ausführungsbeispiels der Erfindung näher erläutert.

Es zeigen:
- Fig. 1: eine schematische Darstellung einer Transporteinrichtung gemäß der Erfindung in einer perspektivischen Ansicht,
- Fig. 2: eine schematische Darstellung der in Fig. 1 gezeigten Transporteinrichtung in einer Seitenansicht,
- Fig. 3: eine schematische Darstellung einer ersten Teilansicht einer Abwandlung der in Fig. 1 gezeigten Transporteinrichtung gemäß der Erfindung in einer perspektivischen Ansicht,
- Fig. 4: eine schematische Darstellung der in Fig. 3 gezeigten ersten Teilansicht der Transporteinrichtung gemäß der Erfindung in einer Draufsicht,
- Fig. 5: eine schematische Darstellung einer zweiten Teilansicht einer Abwandlung der in Fig. 1 gezeigten Transporteinrichtung gemäß der Erfindung in einer perspektivischen Ansicht,
- Fig. 6: eine schematische Darstellung der in Fig. 5 gezeigten zweiten Teilansicht der Transporteinrichtung gemäß der Erfindung in einer Draufsicht,
- Fig. 7: eine schematische Darstellung einer dritten Teilansicht einer Abwandlung der in Fig. 1 gezeigten Transporteinrichtung gemäß der Erfindung in einer perspektivischen Ansicht, die die erste und zweite Teilansicht nach Fig. 3 bis 6 beinhaltet, und
- Fig. 8: eine schematische Darstellung einer Ausgestaltung der in den voraufgehenden Figuren gezeigten Transporteinrichtungen gemäß der Erfindung in einer perspektivischen Ansicht.

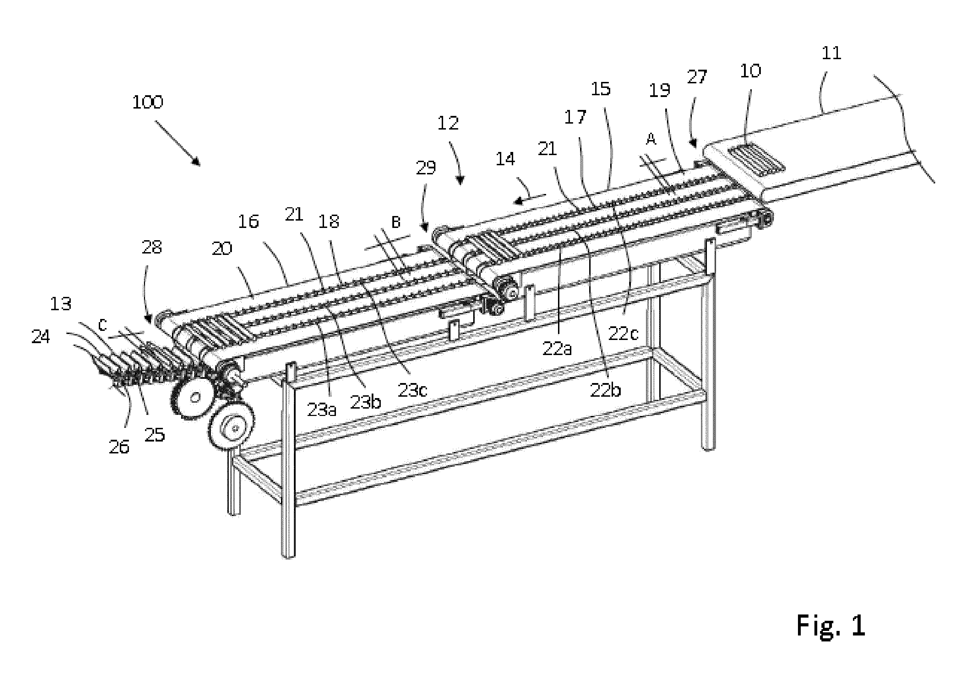

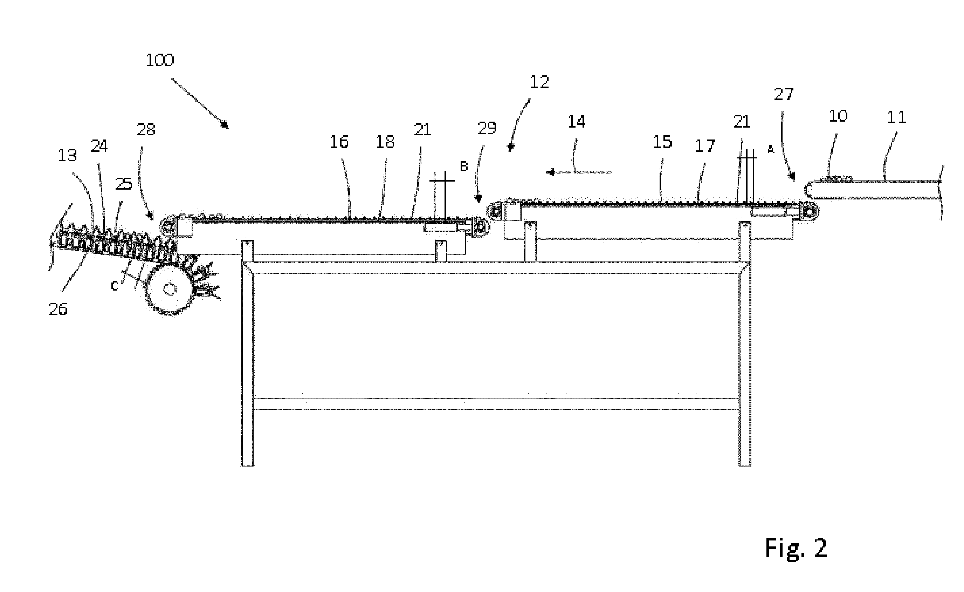

In Fig. 1 und 2 ist eine Transporteinrichtung 100 zum Transport von stangenartigen Gemüsen 10, hier in Form von Spargelstangen, gemäß der Erfindung in zwei verschiedenen Ansichten gezeigt, wobei die Transporteinrichtung 100 insbesondere zum Transport von stangenartigen Gemüsen 10 durch eine Sortiermaschine dienen kann.

Die Transporteinrichtung 100 weist eine entlang einer Aufgabestrecke verfahrbare Aufgabefördermitteleinheit 11, eine entlang einer Förderstrecke verfahrbare erste Fördermitteleinheit 12 und eine entlang einer Sortierstrecke verfahrbare zweite Fördermitteleinheit 13 auf. Die Aufgabefördermitteleinheit 11 ist in Transportrichtung 14 der Gemüse 10 in der Transporteinrichtung 100 vor der ersten Fördermitteleinheit 12 angeordnet und die erste Fördermitteleinheit 12 ist in Transportrichtung 14 der Gemüse 10 in der Transporteinrichtung 100 vor der zweiten Fördermitteleinheit 13 angeordnet. Die Aufgabefördermitteleinheit 11, die erste Fördermitteleinheit 12 und die zweite Fördermitteleinheit 13 sind somit hintereinander angeordnet. Die zu transportierenden Gemüse 10 werden auf die Aufgabefördermitteleinheit 11 aufgegeben, auf der Aufgabefördermitteleinheit 11 transportiert und an die erste Fördermitteleinheit 12 übergegeben. Auf der ersten Fördermitteleinheit 12 werden die Gemüse 10 während des Transportes in Richtung der zweiten Fördermitteleinheit 13 vereinzelt und an die zweite Fördermitteleinheit 13 übergeben, auf welcher dann die Sortierung der Gemüse 10 erfolgt.

Die Aufgabefördermitteleinheit 11 ist hier in Form eines flachen Förderbandes ausgebildet, auf welchem die Gemüse 10 lose, in ihrer Längsrichtung quer zur Transportrichtung 14 aufgegeben werden. Alternativ zu dem Förderband ist auch möglich, dass die Aufgabefördermitteleinheit 11 in Form von Förderketten, auch mehreren parallel zueinander verlaufenden Förderkettenstreifen oder auch Förderbandstreifen, ausgebildet ist.

Die erste Fördermitteleinheit 12 umfasst hier ein erstes Fördermittel 15 und ein in Transportrichtung 14 hinter dem ersten Fördermittel 15 angeordnetes zweites Fördermittel 16. Die beiden Fördermittel 15, 16 und damit die erste Fördermitteleinheit 12 sind in Form von Förderbändern, insbesondere flach ausgebildeten Förderbändern, ausgebildet, auf welchen eine Vielzahl von voneinander getrennten Aufnahmebereiche 17, 18 zur Aufnahme der Gemüse 10 ausgebildet sind. Die Aufnahmebereiche 17, 18 sind durch eine Vielzahl von einer Auflagefläche 19, 20 der Fördermittel 15, 16 hervorstehender Trennelemente 21 ausgebildet, wobei die Trennelemente 21 hier als Trennstege ausgebildet sind. Die Höhe der Trennelemente 21 ist kleiner als der Durchmesser der zu transportierenden Gemüse 10. Die Trennelemente 21 sind auf jedem Fördermittel 15, 16 in drei in Transportrichtung 14 zueinander parallel verlaufenden Streifenbahnen 22a, 22b, 22c, 23a, 23b, 23c angeordnet, so dass die Gemüse 10 entlang ihrer Längsrichtung an drei voneinander beabstandeten Bereichen, einem Fuß der Gemüse 10, einem Kopf der Gemüse 10 und einer zwischen dem Kopf und dem Fuß ausgebildeten Mitte der Gemüse 10, an den Trennelementen 21 anliegen.

Die Aufnahmebereiche 17, 18 des ersten Fördermittels 15 und des zweiten Fördermittels 16 unterscheiden sich in ihren Teilungsmaßen A, B voneinander. Das Teilungsmaß A, B definiert den Abstand der Gemüse 10 auf den jeweiligen Fördermitteln 15, 16 oder Fördermitteleinheiten 12, 13, wobei das Teilungsmaß A, B von einer Mitte eines Aufnahmebereiches 17, 18 zu einem benachbart dazu angeordneten Aufnahmebereich 17, 18, insbesondere in Transportrichtung oder entgegen der Transportrichtung, gemessen wird. Das Teilungsmaß A der Aufnahmebereiche 17 des ersten Fördermittels 15 der ersten Fördermitteleinheit 12 ist kleiner als das Teilungsmaß B der Aufnahmebereiche 18 des zweiten Fördermittels 16 der ersten Fördermitteleinheit 12, so dass der Abstand zwischen den Gemüsen 10 auf dem ersten Fördermittel 15 geringer ist als auf dem zweiten Fördermittel 16.

Die zweite Fördermitteleinheit 13, welche Teil der Sortierstrecke ist, weist ebenfalls eine Vielzahl von voneinander getrennten Aufnahmebereichen 24 zur Aufnahme der Gemüse 10 auf, wobei die Aufnahmebereiche 24 der zweiten Fördermitteleinheit 13 durch voneinander getrennt angeordnete Aufnahmebehältnisse 25 in Form von Schalen ausgebildet sind. Die Aufnahmebehältnisse 25 sind auf einer oder mehreren parallel zueinander verlaufenden Förderketten 26 angeordnet, so dass hier die zweite Fördermitteleinheit 13 aus einer oder mehreren Förderketten 26 und einer Vielzahl von in Transportrichtung hintereinander angeordneten Aufnahmebehältnissen 25 in Form von Schalen ausgebildet ist.

Das Teilungsmaß C der Aufnahmebereiche 24 der zweiten Fördermitteleinheit 13 ist größer als das Teilungsmaß B der Aufnahmebereiche 18 des zweiten Fördermittels 16 der ersten Fördermitteleinheit 12 und damit ebenfalls größer als das Teilungsmaß A der Aufnahmebereiche 17 des ersten Fördermittels 15 der ersten Fördermitteleinheit 12.

Die Aufgabefördermitteleinheit 11, die erste Fördermitteleinheit 12 und die zweite Fördermitteleinheit 13 werden im Betrieb der Transporteinrichtung 100 mit voneinander unterschiedlichen Verfahrgeschwindigkeiten betrieben. Die Verfahrgeschwindigkeit der Transporteinrichtung 100 nimmt dabei in Transportrichtung 14 der Transporteinrichtung 100 zu, so dass die Verfahrgeschwindigkeit der Aufgabefördermitteleinheit 11 kleiner ist als die Verfahrgeschwindigkeit der ersten Fördermitteleinheit 12 und die Verfahrgeschwindigkeit der ersten Fördermitteleinheit 12 kleiner ist als die Verfahrgeschwindigkeit der zweiten Fördermitteleinheit 13. Auch die Fördermittel 15, 16 der ersten Fördermitteleinheit 12 unterscheiden sich in ihrer Verfahrgeschwindigkeit voneinander, wobei die Verfahrgeschwindigkeit des ersten Fördermittels 15 kleiner ist als die Verfahrgeschwindigkeit des zweiten Fördermittels 16.

Die Aufgabefördermitteleinheit 11, die erste Fördermitteleinheit 12 und die zweite Fördermitteleinheit 13 sind ferner insbesondere an den jeweiligen Übergabebereichen 27, 28 zwischen zwei der drei Fördermitteleinheiten 11, 12, 13 höhenversetzt zueinander angeordnet, wobei die Höhe der Fördermitteleinheiten 11, 12, 13 in Transportrichtung 14 abnimmt, so dass die Aufgabenfördermitteleinheit 11, die erste Fördermitteleinheit 12 und die zweite Fördermitteleinheit 13 kaskadenförmig angeordnet sind. Auch die Fördermittel 15, 16 der ersten Fördermitteleinheit 12 sind höhenversetzt zueinander angeordnet, wobei im Übergabebereich 29 zwischen dem ersten Fördermittel 15 und dem zweiten Fördermittel 16 das erste Fördermittel 15 höher angeordnet ist als das zweite Fördermittel 16.

Wie insbesondere in Fig. 2 zu erkennen ist, sind die Aufgabefördermitteleinheit 11 und die Fördermittel 15, 16 der ersten Fördermitteleinheit 12 im Wesentlichen horizontal verlaufend angeordnet, so dass die Steigung der Fördermitteleinheiten 11, 12 gegen Null geht. Die zweite Fördermitteleinheit 13 ist hingegen nicht horizontal verlaufend angeordnet, sondern weist in Transportrichtung 14 eine geringfügige Steigung auf, welche vorzugsweise zwischen 5° und 10° zu einer horizontalen Achse liegt.

Die zweite Fördermitteleinheit 13 weist eine hier nicht gezeigte Antriebseinheit auf, über welche die zweite Fördermitteleinheit 13 und auch die erste Fördermitteleinheit 12 angetrieben werden. Dafür sind zwischen der zweiten Fördermitteleinheit 13 und dem zweiten Fördermittel 16 der ersten Fördermitteleinheit 12 und zwischen dem zweiten Fördermittel 16 und dem ersten Fördermittel 15 der ersten Fördermitteleinheit 12 jeweils eine hier nicht gezeigte Synchronisationseinheit angeordnet, welche mechanisch und/oder elektrisch steuerbar sind.

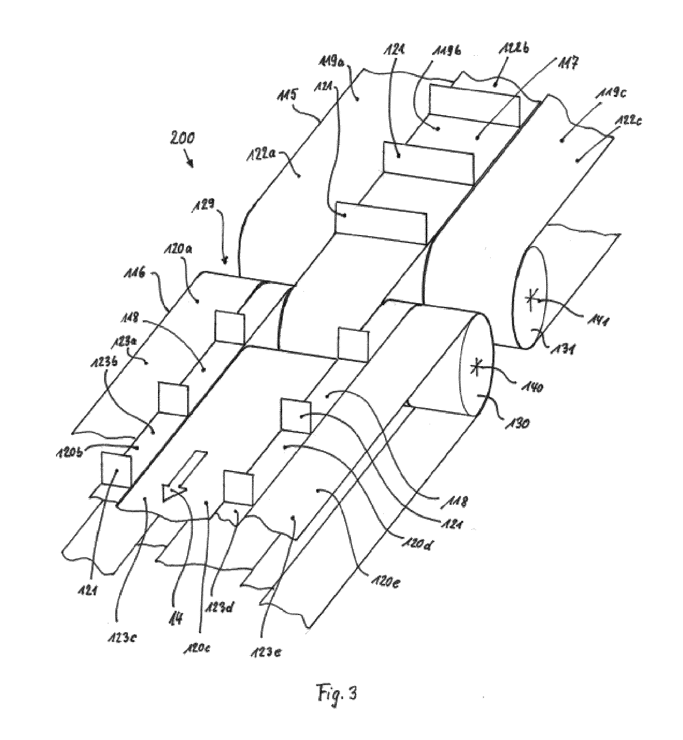

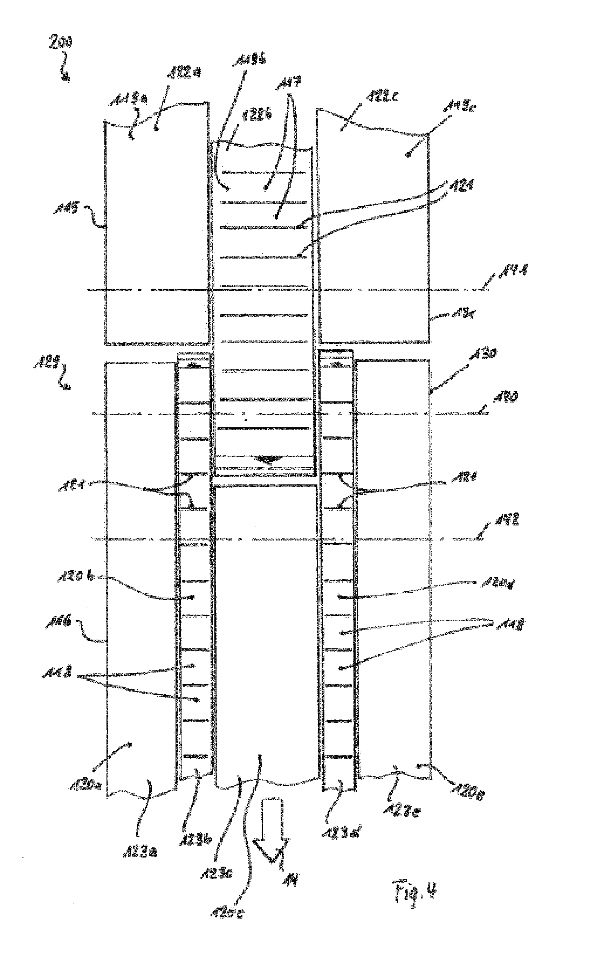

In Fig. 3 und 4 ist als erste Teilansicht einer abgewandelten Ausführung 200 der in Fig. 1 und 2 gezeigten Transporteinrichtung 100 ein Übergabebereich 129 zwischen einer Abwandlung 115 des ersten Fördermittels 15, im folgenden als erstes Fördermittel 115 bezeichnet, und einer Abwandlung 116 des zweiten Fördermittels 16, im folgenden als zweites Fördermittel 116 bezeichnet, dargestellt. Das erste Fördermittel 115 ist mit drei parallel zueinander in Transportrichtung 14 der Gemüse 10 verlaufenden, als Streifenbahnen ausgeführten Förderbändern 122a, 122b, 122c ausgebildet. Auf dem mittig angeordneten Förderband 122b sind Aufnahmebereiche 117 ausgebildet, die durch von einer Auflagefläche 119b hervorstehende Trennelemente 121, insbesondere Trennstege oder Trennnoppen, voneinander getrennt sind. Die außenliegenden Förderbänder 122a, 122c sind mit einer glatten Auflagefläche 119a, 119c, d.h. ohne Trennelemente, ausgeführt. Das zweite Fördermittel 116 ist mit fünf parallel zueinander in Transportrichtung 14 der Gemüse 10 verlaufenden, als Streifenbahnen ausgeführten Förderbändern 123a, 123b, 123c, 123d, 123e ausgebildet. Dabei sind das mittig angeordnete Förderband 123c sowie die außenliegenden Förderbänder 123a, 123c mit einer glatten Auflagefläche 120a, 120c, 120e, d.h. ohne Trennelemente, ausgeführt. Die zwischen dem mittig angeordneten Förderband 123c und je einem der außenliegenden Förderbänder 123a, 123c angeordneten Förderbänder 123b, 123d sind mit Aufnahmebereichen 118 ausgebildet, die durch von Auflageflächen 120b, 120d hervorstehende Trennelemente 121, insbesondere Trennstege oder Trennnoppen, voneinander getrennt sind.

Das erste und das zweite Fördermittel 115, 116 sind im Übergabebereich 129 vom ersten Fördermittel 115 zum zweiten Fördermittel 116, in dem Gemüse 10 vom ersten Fördermittel 115 an das zweite Fördermittel 116 übergeben werden, überlappt angeordnet, und zwar insbesondere höhengleich überlappt. Die Höhengleichheit begünstigt neben den bereits aufgeführten Vorteilen einen handlichen, einfachen, platzsparenden und ergonomisch günstigen Aufbau. Das Überlappen der Fördermittel 115, 116 miteinander ist dadurch bewirkt, dass die Förderbänder 122a, 122b, 122c, 123a, 123b, 123c, 123d, 123e des einen und des anderen der überlappenden Fördermittel 115, 116 abwechselnd nebeneinander angeordnet sind. Insbesondere sind hier die Förderbänder 122b, 123a, 123b, 123d und 123e im Bereich der Überlappung abwechselnd um eine gemeinsame Umlenkrolle 130 und/oder eine Anzahl auf einer gemeinsamen Welle, d.h. auf einer gemeinsamen Drehachse 140, angeordneter Umlenkrollen geführt. Die Förderbänder 122a, 122c und 123c sind auf weiteren Umlenkrollen 131 mit getrennt angeordneten Drehachsen 141, 142 geführt. In einer nicht dargestellten Abwandlung sind sämtliche Förderbänder 122a, 122b, 122c, 123a, 123b, 123c, 123d, 123e der überlappenden Fördermittel 115, 116 um eine einzige, gemeinsame Umlenkrolle und/oder eine Anzahl auf einer gemeinsamen Welle, d.h. auf einer gemeinsamen Drehachse, angeordneter Umlenkrollen geführt. Damit wird ein besonders einfacher und kompakter Aufbau erzielt. Die jeweils auf einer gemeinsamen Welle, d.h. auf einer gemeinsamen Drehachse, angeordneten Umlenkrollen können dabei zur Einstellung der Verfahrgeschwindigkeiten der Förderbänder 122a, 122b, 122c, 123a, 123b, 123c, 123d, 123e unterschiedlich gewählte Durchmesser aufweisen oder wenigstens teilweise lose auf der gemeinsamen Welle angeordnet sein.

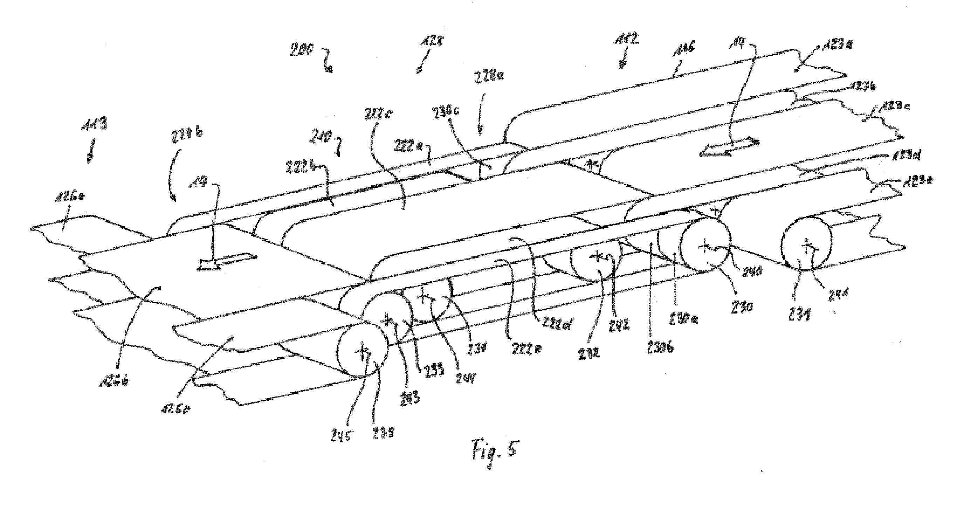

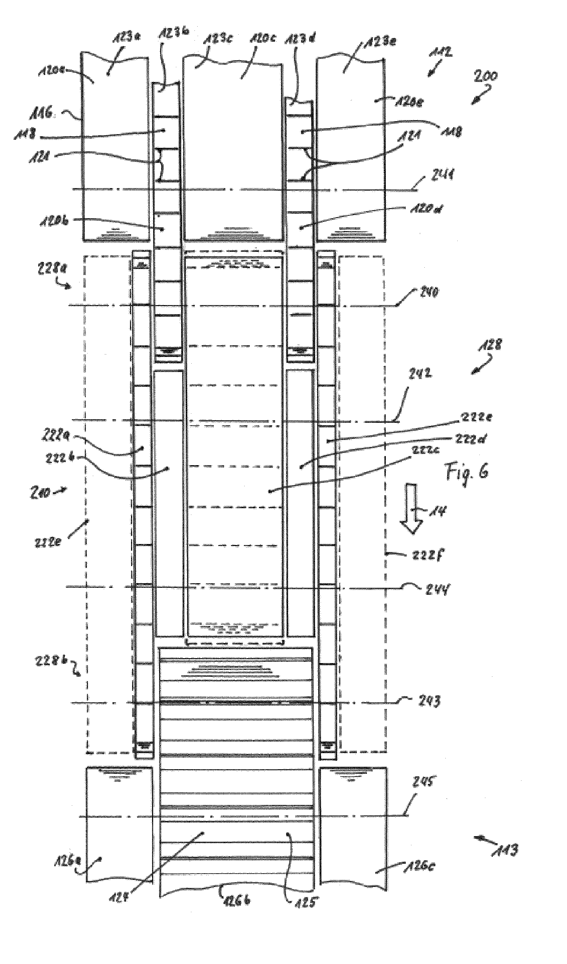

In Fig. 5 und 6 ist als zweite Teilansicht der abgewandelten Ausführung 200 der in Fig. 1 und 2 gezeigten Transporteinrichtung 100 ein Übergabebereich 128 zwischen einer Abwandlung 112 der ersten Fördermitteleinheit 12, im folgenden als erste Fördermitteleinheit 112 bezeichnet, und einer Abwandlung 113 der zweiten Fördermitteleinheit 13, im Folgenden als zweite Fördermitteleinheit 113 bezeichnet, dargestellt. Dabei ist von der ersten Fördermitteleinheit 112 nur ein Teil des zweiten Fördermittels 116 wiedergegeben, das gemäß Fig. 3 und 4 ausgebildet ist und dessen Elemente wieder mit denselben Bezugszeichen versehen und nicht noch einmal beschrieben sind. Außerdem sind der Einfachheit halber in Figur 5 die Darstellungen der Aufnahmebereiche 118, der Auflageflächen 120a, 120b, 120c, 120d, 120 und der Trennelemente 121 weggelassen.

Die zweite Fördermitteleinheit 113 ist mit zwei parallel zueinander in Transportrichtung 14 der Gemüse 10 verlaufenden Förderbändern 126a, 126c und einer zwischen und parallel zu den Förderbändern 126a, 126c verlaufenden Förderkette 126b ausgebildet. Auf der Förderkette 126b sind Aufnahmebehältnisse 125 angeordnet, die Aufnahmebereiche 124 für die Gemüse 10 bilden. Aufnahmebehältnisse 125 und Aufnahmebereiche 124 sind der Einfachheit halber in Figur 5 nicht dargestellt.

Im Übergabebereich 128 ist ein entlang einer Förderstrecke verfahrbares, eine Vielzahl von voneinander getrennten Aufnahmebereichen () zur Aufnahme der Gemüse 10 aufweisendes Übergabefördermittel 210 zur Übergabe der Gemüse 10 von der ersten Fördermitteleinheit 112 an die zweite Fördermitteleinheit 113 angeordnet. Das Übergabefördermittel 210 ist in einer den Fördermitteln 115, 116 entsprechenden Bauart mit in Transportrichtung 14 der Gemüse 10 parallel zueinander verlaufenden, als Streifenbahnen ausgeführten Förderbändern 222a, 222b, 222c, 222d, 222e ausgebildet. Dabei tragen die Förderbänder 222a, 222e Trennelemente 221, wohingegen die Förderbänder 222b, 222d glatt ausgeführt sind. Das mittlere Förderband 222c ist wahlweise glatt oder mit Trennelementen 121 ausgestaltet. Auch die Trennelemente 221 sind der Einfachheit halber in Figur 5 nicht dargestellt. Wahlweise sind an Außenseiten des Übergabefördermittels 210 weitere, als Streifenbahnen ausgeführte Förderbänder 222f, 222g vorgesehen. Die wahlweise vorgesehenen Trennelemente 221 und Förderbänder 222f, 222g sind in Figur 6 gestrichelt dargestellt, in Figur 5 jedoch weggelassen.

Das Übergabefördermittel 210 ist in Transportrichtung 14 der Gemüse 10 einerseits überlappt mit dem zweiten Fördermittel 116 der ersten Fördermitteleinheit 112 und anderseits überlappt mit der zweiten Fördermitteleinheit 113 angeordnet. Insbesondere sind hier diese Überlappungen höhengleich ausgeführt. Der überlappungsbereich des Übergabefördermittels 210 mit dem zweiten Fördermittel 116 der ersten Fördermitteleinheit 112 ist mit dem Bezugszeichen 228a bezeichnet, und der überlappungsbereich des Übergabefördermittels 210 mit der zweiten Fördermitteleinheit 113 ist mit dem Bezugszeichen 228b bezeichnet. Die Überlappungen des Übergabefördermittels 210 mit dem zweiten Fördermittel 116 der ersten Fördermitteleinheit 112 und mit der zweiten Fördermitteleinheit 113 sind wiederum dadurch bewirkt, dass die Förderbänder 123a, 123b, 123c, 123d, 123e, 222a, 222b, 222c, 222d, 222e im Überlappungsbereich 222a einerseits sowie die Förderbänder 222a, 222b, 222c, 222d, 222e, 126a, 126c und die Förderkette 126b im Überlappungsbereich 222b andererseits abwechselnd nebeneinander angeordnet sind.

Insbesondere sind hier die Förderbänder 123b, 123d, 222a, 222c und 222e-sowie ggf. die wahlweise vorgesehenen Förderbänder 222f und 222g- im Überlappungsbereich 228a um eine gemeinsame Umlenkrolle 230 und/oder eine Anzahl auf einer gemeinsamen Welle, d.h. auf einer gemeinsamen Drehachse 240, angeordneter Umlenkrollen 230a, 230b, 230c geführt. Die Förderbänder 123a, 123c und 123c sind auf weiteren Umlenkrollen 231 mit einer getrennt angeordneten Drehachse 241 geführt, und die Förderbänder 222b und 222d sind auf noch weiteren Umlenkrollen 232 mit einer getrennt angeordneten weiteren Drehachse 242 geführt. Weiterhin sind im Überlappungsbereich 228b die Förderbänder 222a und 222e - sowie ggf. die wahlweise vorgesehenen Förderbänder 222f und 222g - und die Förderkette 126b abwechselnd um eine gemeinsame Umlenkrolle 233 und/oder eine Anzahl auf einer gemeinsamen Welle, d.h. auf einer gemeinsamen Drehachse 243, angeordneter Umlenkrollen geführt. Die Förderbänder 222b, 222c, 222d sind auf weiteren Umlenkrollen 234 mit einer getrennt angeordneten Drehachse 244 geführt, und die Förderbänder 126a und 126b sind auf noch weiteren Umlenkrollen 235 mit einer getrennt angeordneten, noch weiteren Drehachse 245 geführt. In nicht dargestellten Abwandlungen können die hier über Umlenkrollen auf unterschiedlichen Drehachsen geführten Förderbänder auch auf Umlenkrollen geführt sein, die in jedem der Überlappungsbereiche 228a, 228b auf einer Drehachse zusammengefasst sind.

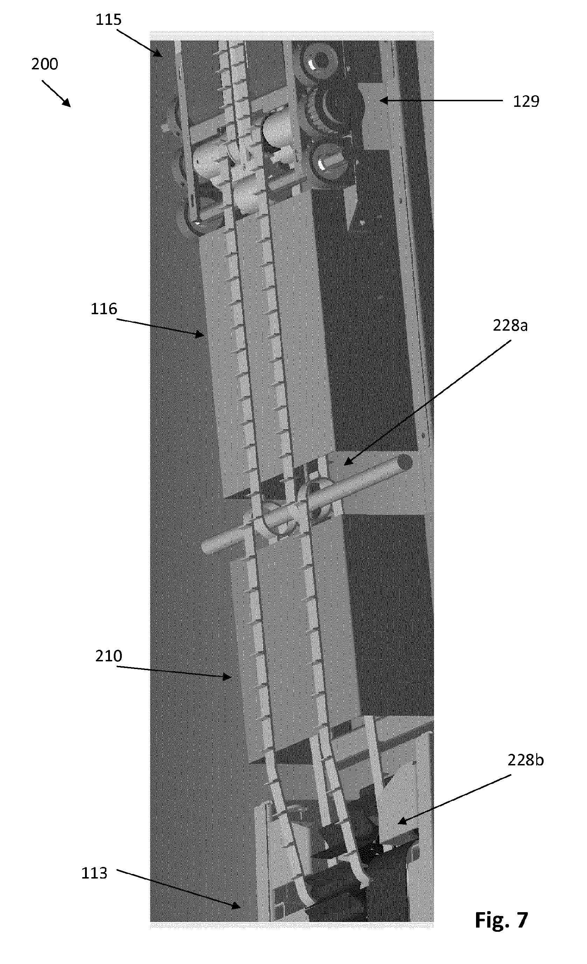

Fig. 7 zeigt in einer perspektivischen Gesamtübersicht über die Teilansichten der Fig. 3 bis 6 die erste Fördermitteleinheit 112 mit den Fördermitteln 115, 116, das Übergabefördermittel 210 und die zweite Fördermitteleinheit 113 sowie deren Überlappungen, wobei übereinstimmende Elemente wieder mit denselben Bezugszeichen bezeichnet sind. Dargestellt ist dabei eine Variante, bei der die Umlenkrollen in jedem der Überlappungsbereiche 228a, 228b auf einer Drehachse zusammengefasst sind.

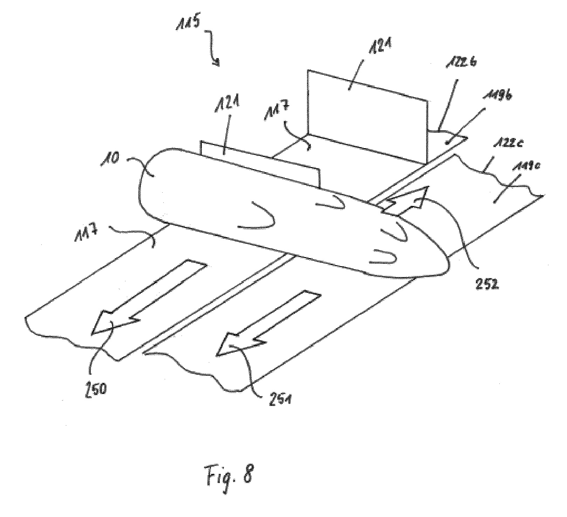

Fig. 8 zeigt am Beispiel eines Ausschnitts aus dem ersten Fördermittel 115 eine Ausgestaltung der erfindungsgemäßen Transporteinrichtung 200, bei der das Förderband 122b, das mit Trennelementen 121 ausgebildet ist, eine Verfahrgeschwindigkeit aufweist, die gegenüber der Verfahrgeschwindigkeit des glatten Förderbandes 122c um so viel größer ist, dass die zu fördernden stangenartigen Gemüse 10 beim Fördern zuverlässig an den Trennelementen 121 anliegen. Bevorzugt ist die Verfahrgeschwindigkeit des Förderbands 122b gegenüber der Verfahrgeschwindigkeit des glatten Förderbandes 122c gerade eben um so viel größer, dass die Gemüse 10 zuverlässig an den Trennelementen 121 anliegen, d.h. zwischen den Verfahrgeschwindigkeiten besteht so wenig Unterschied wie möglich, um noch den gewünschten Effekt des zuverlässigen Anliegens der Gemüse 10 an den Trennelementen 121 zu gewährleisten, wobei ein zuverlässiges Anliegen der Gemüse bedeutet, dass diese sicher und ohne Ausnahme im Betrieb die gewünschte Position einhalten. Im gezeigten Beispiel nach Fig. 8 liegen die Gemüse 10 immer in einer hinteren Position an den Trennelementen 121 und werden exakt und definiert von dort in die Aufnahmebehältnisse 125 gegeben. Es findet somit eine exakt definierte Übergabe des Gemüses 10 und damit ein fehlerfreies Vereinzeln statt. Die Pfeile 250, 251 symbolisieren in Fig. 8 die unterschiedlichen Verfahrgeschwindigkeiten; der Pfeil 252 symbolisiert das daraus resultierende Anliegen der Gemüse 10 am Trennelement 121.

### Bezugszeichenliste

- 100: Transporteinrichtung
- 10: Gemüse
- 11: Aufgabefördermitteleinheit
- 12: Erste Fördermitteleinheit
- 13: Zweite Fördermitteleinheit
- 14: Transportrichtung
- 15: Erstes Fördermittel
- 16: Zweites Fördermittel
- 17, 18: Aufnahmebereich
- 19, 20: Auflagefläche
- 21: Trennelement
- 22a, 22b, 22c: Streifenbahn
- 23a, 23b, 23c: Streifenbahn
- 24: Aufnahmebereich
- 25: Aufnahmebehältnis
- 26: Förderkette
- 27, 28, 29: Übergabebereich
- A, B, C: Teilungsmaß
- 200: Transporteinrichtung
- 112: Erste Fördermitteleinheit
- 113: Zweite Fördermitteleinheit
- 115: Erstes Fördermittel
- 116: Zweites Fördermittel
- 117, 118: Aufnahmebereich
- 119a, 119b, 119c: Auflagefläche
- 120a, 120b, 120c, 120d, 120e: Auflagefläche
- 121: Trennelement
- 122a, 122b, 122c: als Streifenbahn ausgeführte Förderbänder
- 123a, 123b, 123c, 123d, 123e: als Streifenbahn ausgeführte Förderbänder
- 124: Aufnahmebereich
- 125: Aufnahmebehältnis
- 126a: Förderband
- 126b: Förderkette
- 126c: Förderband
- 27, 128, 129: Übergabebereich
- 130, 131: Umlenkrolle
- 140, 141, 142: Drehachse

- 210: Übergabefördermittel
- 222a, 222b, 222c, 222d, 222e: als Streifenbahn ausgeführte Förderbänder
- 222f, 222g: als Streifenbahn ausgeführte Förderbänder
- 228a, 228b: Überlappungsbereich
- 230, 230a, 230b, 230c: Umlenkrollen
- 240: Drehachse
- 250, 251, 252: Pfeile

## Patentansprüche

1. Transporteinrichtung (100) zum Transport von stangenartigen Gemüsen (10),
mit mindestens einer entlang einer Förderstrecke verfahrbaren, eine Vielzahl von voneinander getrennten Aufnahmebereichen (17, 18) zur Aufnahme der Gemüse (10) aufweisenden ersten Fördermitteleinheit (12) zum Vereinzeln der Gemüse (10), und
mit mindestens einer entlang einer Sortierstrecke verfahrbaren, eine Vielzahl von voneinander getrennten Aufnahmebereichen (24) zur Aufnahme der Gemüse (10) aufweisenden zweiten Fördermitteleinheit (13) zum Sortieren der Gemüse (10),
wobei in Transportrichtung (14) der Gemüse (10) die zweite Fördermitteleinheit (13) hinter der ersten Fördermitteleinheit (12) angeordnet ist, und
wobei die erste Fördermitteleinheit (12) eine Verfahrgeschwindigkeit aufweist, welche geringer ist als eine Verfahrgeschwindigkeit der zweiten Fördermitteleinheit (13).

2. Transporteinrichtung (100) nach Anspruch 1, **dadurch gekennzeichnet, dass** die Verfahrgeschwindigkeit der ersten Fördermitteleinheit (12) zu der Verfahrgeschwindigkeit der zweiten Fördermitteleinheit (13) in einem Verhältnis von 1 zu 1,1 bis 1 zu 10, bevorzugt von 1 zu 1,3 bis 1 zu 5, besonders bevorzugt von 1 zu 1,5 bis 1 zu 3,5, steht, und/oder dass die erste Fördermitteleinheit (12) eine Verfahrgeschwindigkeit zwischen 0,10 m/s und 0,55 m/s, bevorzugt zwischen 0,15 m/s und 0,45 m/s, aufweist, und dass die zweite Fördermitteleinheit (13) eine Verfahrgeschwindigkeit zwischen 0,30 m/s und 0,80 m/s, bevorzugt zwischen 0,50 m/s und 0,70 m/s, aufweist.

3. Transporteinrichtung (100) nach Anspruch 1 oder 2, **dadurch gekennzeichnet, dass** ein von einer Mitte eines Aufnahmebereiches (17, 18) der ersten Fördermitteleinheit (12) zu einer Mitte eines benachbart dazu angeordneten Aufnahmebereiches (17, 18) der ersten Fördermitteleinheit (12) gemessenes Teilungsmaß (A, B) kleiner ist als ein von einer Mitte eines Aufnahmebereiches (24) der zweiten Fördermitteleinheit (13) zu einer Mitte eines benachbart dazu angeordneten Aufnahmebereiches (24) der zweiten Fördermitteleinheit (13) gemessenes Teilungsmaß (C), wobei insbesondere ein Verhältnis eines Teilungsmaßes (A, B) der Aufnahmebereiche (17, 18) der ersten Fördermitteleinheit (12) zu einem Teilungsmaß (C) der Aufnahmebereiche (24) der zweiten Fördermitteleinheit (13) gleich einem Verhältnis einer Verfahrgeschwindigkeit der ersten Fördermitteleinheit (12) zu einer Verfahrgeschwindigkeit der zweiten Fördermitteleinheit (13) ist,
wobei insbesondere ein Teilungsmaß (A, B) der Aufnahmebereiche (17, 18) der ersten Fördermitteleinheit (12) zu einem Teilungsmaß (C) der Aufnahmebereiche (24) der zweiten Fördermitteleinheit (13) ein Verhältnis von 1 zu 1,1 bis 1 zu 10, bevorzugt von 1 zu 1,3 bis 1 zu 5, besonders bevorzugt von 1 zu 1,5 bis 1 zu 3,5, aufweist, und
wobei insbesondere ein Teilungsmaß (A, B) der Aufnahmebereiche (17, 18) der ersten Fördermitteleinheit (12) zwischen 10 mm und 50 mm, bevorzugt zwischen 15 mm und 40 mm, besonders bevorzugt zwischen 20 mm und 35 mm, ist, und dass ein Teilungsmaß (C) der Aufnahmebereiche (24) der zweiten Fördermitteleinheit (13) zwischen 35 mm und 70 mm, bevorzugt zwischen 40 mm und 60 mm, besonders bevorzugt zwischen 45 mm und 55 mm, ist.

4. Transporteinrichtung (100) nach einem der vorhergehenden Ansprüche, **dadurch gekennzeichnet, dass** die Aufnahmebereiche (17, 18) der ersten Fördermitteleinheit (12) durch von einer Auflagefläche (19, 20) der ersten Fördermitteleinheit (12) hervorstehende Trennelemente (21), insbesondere Trennstege oder Trennnoppen, voneinander getrennt sind, und/oder dass die Aufnahmebereiche (24) der zweiten Fördermitteleinheit (13) durch von einer Auflagefläche der zweiten Fördermitteleinheit (13) hervorstehende Trennelemente, insbesondere Trennstege oder Trennnoppen, voneinander getrennt sind, und/oder dass die Aufnahmebereiche (17, 18) der ersten Fördermitteleinheit (12) durch voneinander getrennt angeordnete Aufnahmebehältnisse, insbesondere Schalen oder Mulden, ausgebildet sind, und/oder dass die Aufnahmebereiche (24) der zweiten Fördermitteleinheit (13) durch voneinander getrennt angeordnete Aufnahmebehältnisse (25), insbesondere Schalen oder Mulden, ausgebildet sind.

5. Transporteinrichtung (100) nach einem der vorhergehenden Ansprüche, **dadurch gekennzeichnet, dass** die erste Fördermitteleinheit (12) von einer Antriebseinheit, insbesondere einem Antriebsmotor, der zweiten Fördermitteleinheit (13) angetrieben ist, wobei zur Anpassung der Verfahrgeschwindigkeit der ersten Fördermitteleinheit (12) eine erste Synchronisationseinheit vorgesehen ist, wobei insbesondere die erste Synchronisationseinheit elektrisch und/oder mechanisch steuerbar ist.

6. Transporteinrichtung (100) nach einem der vorhergehenden Ansprüche, **dadurch gekennzeichnet, dass** in einem Übergabebereich (28) der ersten Fördermitteleinheit (12) zu der zweiten Fördermitteleinheit (13) die erste Fördermitteleinheit (12) höhenversetzt zu der zweiten Fördermitteleinheit (13), insbesondere mit einer in Transportrichtung (14) der Gemüse (10) abnehmenden Höhe, angeordnet ist, und/oder dass in einem Übergabebereich () der ersten Fördermitteleinheit () zu der zweiten Fördermitteleinheit () die erste Fördermitteleinheit () in Transportrichtung (14) der Gemüse (10) überlappt mit der zweiten Fördermitteleinheit (), insbesondere höhengleich überlappt, angeordnet ist, und/oder
dass in einem Übergabebereich () der ersten Fördermitteleinheit () zu der zweiten Fördermitteleinheit () ein entlang einer Förderstrecke verfahrbares, eine Vielzahl von voneinander getrennten Aufnahmebereichen () zur Aufnahme der Gemüse (10) aufweisendes Übergabefördermittel () zum Übergeben der Gemüse (10) von der ersten Fördermitteleinheit () an die zweite Fördermitteleinheit () angeordnet ist, wobei das Übergabefördermittel () eine Verfahrgeschwindigkeit aufweist, welche größer ist als die Verfahrgeschwindigkeit der ersten Fördermitteleinheit () und welche geringer ist als die Verfahrgeschwindigkeit der zweiten Fördermitteleinheit (), wobei insbesondere das Übergabefördermittel () in Transportrichtung (14) der Gemüse (10) einerseits überlappt mit der ersten Fördermitteleinheit (), bevorzugt höhengleich überlappt, angeordnet ist und/oder anderseits überlappt mit der zweiten Fördermitteleinheit (), bevorzugt höhengleich überlappt, angeordnet ist, und wobei insbesondere ein von einer Mitte eines Aufnahmebereiches () des Übergabefördermittels () zu einer Mitte eines benachbart dazu angeordneten Aufnahmebereiches () des Übergabefördermittels () gemessenes Teilungsmaß () größer ist als ein von einer Mitte eines Aufnahmebereiches () der ersten Fördermitteleinheit () zu einer Mitte eines benachbart dazu angeordneten Aufnahmebereiches () der ersten Fördermitteleinheit () gemessenes Teilungsmaß (A, B) und kleiner ist als ein von einer Mitte eines Aufnahmebereiches (24) der zweiten Fördermitteleinheit (13) zu einer Mitte eines benachbart dazu angeordneten Aufnahmebereiches (24) der zweiten Fördermitteleinheit (13) gemessenes Teilungsmaß (C).

7. Transporteinrichtung (100) nach einem der vorhergehenden Ansprüche, **dadurch gekennzeichnet, dass** die erste Fördermitteleinheit (12) ein entlang einer Strecke der Förderstrecke verfahrbares erstes Fördermittel (15) und mindestens ein entlang einer Strecke der Förderstrecke verfahrbares zweites Fördermittel (16) aufweist, wobei das zweite Fördermittel (16) in Transportrichtung (14) der Gemüse (10) hinter dem ersten Fördermittel (15) angeordnet ist, wobei insbesondere das erste Fördermittel (15) eine Verfahrgeschwindigkeit aufweist, welche geringer ist als eine Verfahrgeschwindigkeit des zweiten Fördermittels (16), wobei bevorzugt die Verfahrgeschwindigkeit des ersten Fördermittels (15) zu der Verfahrgeschwindigkeit des zweiten Fördermittels (16) ein Verhältnis von 1 zu 1,2 bis 1 zu 5, besonders bevorzugt von 1 zu 1,4 bis 1 zu 3,5, ganz besonders bevorzugt von 1 zu 1,6 bis 1 zu 2,5 aufweist, und/oder wobei bevorzugt das erste Fördermittel (15) eine Verfahrgeschwindigkeit zwischen 0,10 m/s und 0,40 m/s, besonders bevorzugt zwischen 0,15 m/s und 0,30 m/s, aufweist und bevorzugt das zweite Fördermittel (16) eine Verfahrgeschwindigkeit zwischen 0,15 m/s und 0,55 m/s, besonders bevorzugt zwischen 0,25 m/s und 0,45 m/s, aufweist.

8. Transporteinrichtung (100) nach Anspruch 7, **dadurch gekennzeichnet, dass** ein von einer Mitte eines Aufnahmebereiches (17) des ersten Fördermittels (15) zu einer Mitte eines benachbart dazu angeordneten Aufnahmebereiches (17) des ersten Fördermittels (15) gemessenes Teilungsmaß (A) kleiner ist als ein von einer Mitte eines Aufnahmebereiches (18) des zweiten Fördermittels (16) zu einer Mitte eines benachbart dazu angeordneten Aufnahmebereiches (18) des zweiten Fördermittels (16) gemessenes Teilungsmaß (B), wobei insbesondere ein Teilungsmaß (A) der Aufnahmebereiche (17) des ersten Fördermittels (15) zu einem Teilungsmaß (B) der Aufnahmebereiche (18) des zweiten Fördermittels (16) ein Verhältnis von 1 zu 1,2 bis 1 zu 5, bevorzugt von 1 zu 1,4 bis 1 zu 3,5, besonders bevorzugt von 1 zu 1,6 bis 1 zu 2,5, aufweist, und/oder wobei insbesondere ein Teilungsmaß (A) der Aufnahmebereiche (17) des ersten Fördermittels (15) zwischen 10 mm und 30 mm, bevorzugt zwischen 15 mm und 25 mm, ist, und dass ein Teilungsmaß (B) der Aufnahmebereiche (18) des zweiten Fördermittels (16) zwischen 20 mm und 45 mm, bevorzugt zwischen 25 mm und 35 mm, ist.

9. Transporteinrichtung (100) nach Anspruch 7 oder 8, **dadurch gekennzeichnet, dass** zur Anpassung der Verfahrgeschwindigkeit des ersten Fördermittels (15) und/oder des zweiten Fördermittels (16) eine zweite Synchronisationseinheit vorgesehen ist, welche insbesondere mechanisch und/oder elektrisch steuerbar ist.

10. Transporteinrichtung (100) nach einem der Ansprüche 7 bis 9, **dadurch gekennzeichnet, dass** in einem Übergabebereich (29) zwischen dem ersten Fördermittel (15) und dem zweiten Fördermittel (16) das erste Fördermittel (15) zu dem zweiten Fördermittel (16) höhenversetzt, insbesondere das erste Fördermittel (15) höher als das zweite Fördermittel (16), angeordnet ist, und/oder dass in einem Übergabebereich (29) zwischen dem ersten Fördermittel (15) und dem zweiten Fördermittel (16) das erste Fördermittel (15) in Transportrichtung (14) der Gemüse (10) überlappt mit dem zweiten Fördermittel (16), insbesondere höhengleich überlappt, angeordnet ist.

11. Transporteinrichtung (100) nach einem der vorhergehenden Ansprüche, **dadurch gekennzeichnet, dass** die Transporteinrichtung (100) eine in Transportrichtung (14) der Gemüse (10) vor der ersten Fördermitteleinheit (12) angeordnete, entlang einer Aufgabestrecke verfahrbare Aufgabefördermitteleinheit (11) zur Aufgabe der Gemüse (10) aufweist, wobei die Aufgabefördermitteleinheit (11) eine Verfahrgeschwindigkeit aufweist, welche geringer ist als die Verfahrgeschwindigkeit der ersten Fördermitteleinheit (12).

12. Transporteinrichtung (100) nach Anspruch 11, **dadurch gekennzeichnet, dass** in einem Übergabebereich (27) der Aufgabefördermitteleinheit (11) zu der ersten Fördermitteleinheit (12) die Aufgabefördermitteleinheit (11) höhenversetzt zu der ersten Fördermitteleinheit (12), insbesondere mit einer in Transportrichtung (14) der Gemüse (10) abnehmenden Höhe, angeordnet ist, und/oder dass in einem Übergabebereich () der Aufgabefördermitteleinheit () zu der ersten Fördermitteleinheit () die Aufgabefördermitteleinheit () in Transportrichtung (14) der Gemüse (10) überlappt mit der ersten Fördermitteleinheit (), insbesondere höhengleich überlappt, angeordnet ist.

13. Transporteinrichtung () nach einem der vorhergehenden Ansprüche, **dadurch gekennzeichnet, dass** die Aufgabefördermitteleinheit () und die erste Fördermitteleinheit () und/oder die erste Fördermitteleinheit () und die zweite Fördermitteleinheit () und/oder die erste Fördermitteleinheit () und das Übergabefördermittel () und/oder das Übergabefördermittel () und die zweite Fördermitteleinheit () und/oder das erste Fördermittel () und das zweite Fördermittel () mit einer oder mehreren parallel zueinander verlaufenden Förderketten () und/oder einem oder mehreren parallel zueinander verlaufenden Förderbändern () ausgebildet sind, auf denen die Aufnahmebereiche angeordnet sind, wobei ein Überlappen der Fördermittel () und/oder Fördermitteleinheiten () miteinander dadurch bewirkt ist, dass das eine oder die mehreren Förderbänder () und/oder die eine oder mehreren Förderketten () des einen und des anderen der überlappenden Fördermittel () und/oder der einen und der anderen der überlappenden Fördermitteleinheiten () abwechselnd nebeneinander angeordnet sind, insbesondere, dass das eine der Fördermittel () und/oder die eine der Fördermitteleinheiten () mit einem Förderband oder einer Förderkette und das andere der Fördermittel () und/oder die andere der Fördermitteleinheiten () mit zwei Förderbändern und/oder Förderketten ausgebildet sind und je eines der beiden Förderbänder und/oder Förderketten an je einer Seite neben dem einen Förderband oder der einen Förderkette angeordnet ist.

14. Transporteinrichtung () nach einem oder mehreren der vorhergehenden Ansprüche, **dadurch gekennzeichnet, dass** eines oder mehrere der Fördermittel () und/oder Fördermitteleinheiten () mit wenigstens zwei parallel zueinander verlaufenden Förderketten () und/oder Förderbändern () ausgebildet sind, dass bei wenigstens einem des einen oder der mehreren der Fördermittel () und/oder Fördermitteleinheiten () nur eine Teilanzahl der parallel zueinander verlaufenden Förderketten () und/oder Förderbänder () mit die Aufnahmebereiche voneinander trennenden Trennelementen (), insbesondere Trennstegen oder Trennnoppen, und/oder Aufnahmebehältnissen (), insbesondere Schalen oder Mulden, ausgebildet ist und die übrigen der parallel zueinander verlaufenden Förderketten () und/oder Förderbänder () eine durchgehende Auflagefläche aufweisen, und dass die eine durchgehende Auflagefläche aufweisenden Förderketten () und/oder Förderbänder () eine Verfahrgeschwindigkeit aufweisen, die gegenüber der Verfahrgeschwindigkeit der mit Trennelementen () und/oder Aufnahmebehältnissen () ausgebildeten Förderketten () und/oder Förderbänder () um so viel größer oder geringer, bevorzugt gerade eben um so viel größer oder geringer, ist, dass die zu fördernden stangenartigen Gemüse beim Fördern zuverlässig an den Trennelementen () und/oder an die Aufnahmebehältnisse () gegeneinander abgrenzenden Wandungen () anliegen.

15. Sortiermaschine für stangenartige Gemüse (10) mit einer nach einem oder mehreren der vorhergehenden Ansprüche ausgebildeten Transporteinrichtung (100).
